(19) Europäisches Patentamt
European Patent Office
Office européen des brevets

(11) **EP 4 694 339 A1**

(12) **EUROPEAN PATENT APPLICATION**
published in accordance with Art. 153(4) EPC

(43) Date of publication:
**11.02.2026 Bulletin 2026/07**

(21) Application number: **24803092.6**

(22) Date of filing: **10.05.2024**

(51) International Patent Classification (IPC):
***H04W 36/00*** (2009.01)

(52) Cooperative Patent Classification (CPC):
**H04L 5/00; H04W 36/00; H04W 72/0453;
H04W 72/542**

(86) International application number:
**PCT/CN2024/092359**

(87) International publication number:
**WO 2024/230814 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 CN 202310533185**

(71) Applicant: **Huawei Technologies Co., Ltd.
Shenzhen, Guangdong 518129 (CN)**

(72) Inventors:
• **YOU, Chunhua
Shenzhen, Guangdong 518129 (CN)**
• **FAN, Qiang
Shenzhen, Guangdong 518129 (CN)**
• **ZHANG, Hongzhuo
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57) This application relates to the field of communication technologies, and discloses a communication method and apparatus. The method includes: A terminal receives first information, where the first information indicates that a first reference signal of a first cell and a second reference signal of a second cell belong to a same group; the terminal receives second information, where the second information indicates that the first cell is a target cell for handover; and the terminal accesses the target cell by using a timing advance TA of the target cell, where the TA of the target cell is determined based on a TA of the second cell, the first reference signal, and the second reference signal. According to the foregoing method, after determining, based on the first information, that the first reference signal and the second reference signal belong to the same group, the terminal may determine the TA of the target cell based on the TA of the second cell, the first reference signal, and the second reference signal, and does not need to obtain the TA of the target cell through random access. This reduces random access during cell handover and further reduces an interruption delay.

FIG. 6

EP 4 694 339 A1

**Description**

CROSS-REFERENCE TO RELATED APPLICATIONS

This application claims priority to Chinese Patent Application No. 202310533185.1, filed with the China National Intellectual Property Administration on May 11, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Cell handover is a very important feature in a communication system, and is mainly triggered by movement of a terminal when the terminal is in an RRC connected state, so that before signal quality of a serving cell becomes incapable of supporting communication, the terminal device is handed over to a neighboring cell with good signal quality, to provide continuous and uninterrupted communication services.

However, for the cell handover, how to determine a timing advance (timing advance, TA) of a target cell to access the target cell by using the TA of the target cell still needs to be further studied.

SUMMARY

This application provides a communication method and apparatus, to determine a TA of a target cell based on a downlink timing difference, so as to reduce random access during cell handover and further reduce an interruption delay.

**According to a first aspect,** an embodiment of this application provides a communication method. The method may be applied to a terminal or a module (for example, a chip or a circuit) in the terminal. For example, the method is applied to the terminal. In the method, the terminal receives first information, where the first information indicates that a first reference signal of a first cell and a second reference signal of a second cell belong to a same group; the terminal receives second information, where the second information indicates that the first cell is a target cell for handover; and the terminal accesses the target cell by using a timing advance TA of the target cell, where the TA of the target cell is determined based on a TA of the second cell, the first reference signal, and the second reference signal.

According to the foregoing method, after determining, based on the first information, that the first reference signal and the second reference signal belong to the same group, the terminal may determine the TA of the target cell based on the TA of the second cell, the first reference signal, and the second reference signal, and does not need to obtain the TA of the target cell through random access. This reduces random access during cell handover and further reduces an interruption delay.

In a possible design, the first information includes a parameter corresponding to the group, and the parameter includes: an index of the first reference signal and an index of the second reference signal; an identifier of the first cell and an identifier of the second cell; or configuration information of the first reference signal and configuration information of the second reference signal.

In a possible design, the method further includes: sending first capability information, where the first capability information indicates that the terminal supports determining a TA based on intra-frequency reference signals, and the first reference signal and the second reference signal are intra-frequency reference signals.

In this way, the terminal sends the first capability information to a network device, so that the network device can determine group information of a reference signal based on the first capability information. In this way, the group information of the reference signal is more appropriate, thereby helping improve accuracy of the determined TA of the target cell.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the method further includes: sending second capability information, where the second capability information indicates that the terminal supports determining a TA based on inter-frequency reference signals, and the first reference signal and the second reference signal are inter-frequency reference signals.

In this way, the terminal sends the second capability information to a network device, so that the network device can determine group information of a reference signal based on the second capability information. In this way, the group information of the reference signal is more appropriate, thereby helping improve accuracy of the determined TA of the target cell.

In a possible design, the second capability information further indicates at least one band combination, each band combination includes at least one band, and frequencies corresponding to the first reference signal and the second reference signal are in a same band combination.

In other words, due to a capability limitation of the terminal, the terminal may support a specific band combination. When the frequencies corresponding to the first reference signal and the second reference signal are in a same band combination supported by the terminal, the first reference signal and the second reference signal can be used to determine the TA of the first cell.

In a possible design, that the first reference signal and the second reference signal are inter-frequency reference signals includes: The first reference signal and the second reference signal correspond to different frequencies, or the first reference signal and the second reference signal correspond to different subcarrier spacings.

In a possible design, the method further includes: receiving third information from a network device, where the third information indicates to access the target cell in a random-access-less manner.

In this way, the network device may control, by using the third information, whether the terminal uses, when the terminal accesses the target cell, the TA that is of the target cell and that is determined based on the downlink timing difference, so that the network device flexibly manages and controls the terminal.

**According to a second aspect,** an embodiment of this application provides a communication method. The method may be applied to a network device or a chip in the network device. For example, the method is applied to the network device. In the method, the network device sends first information, where the first information indicates that a first reference signal of a first cell and a second reference signal of a second cell belong to a same group; and the network device sends second information, where the second information indicates that the first cell is a target cell for handover, and the first reference signal and the second reference signal are used to determine a TA of the target cell.

In a possible design, the first information includes a parameter corresponding to the group, and the parameter includes: an index of the first reference signal and an index of the second reference signal; an identifier of the first cell and an identifier of the second cell; or configuration information of the first reference signal and configuration information of the second reference signal.

In a possible design, the method further includes: receiving first capability information, where the first capability information indicates that a terminal supports determining a TA based on intra-frequency reference signals; and sending the first information includes: sending the first information based on the first capability information, the configuration information of the first reference signal, and the configuration information of the second reference signal, where the configuration information of the first reference signal and the configuration information of the second reference signal indicate that the first reference signal and the second reference signal are intra-frequency reference signals.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the method further includes: receiving second capability information, where the second capability information indicates that a terminal supports determining a TA based on inter-frequency reference signals; and sending the first information includes: sending the first information based on the second capability information, the configuration information of the first reference signal, and the configuration information of the second reference signal, where the configuration information of the first reference signal and the configuration information of the second reference signal indicate that the first reference signal and the second reference signal are inter-frequency reference signals.

In a possible design, the second capability information further indicates at least one band combination, each band combination includes at least one band, and frequencies corresponding to the first reference signal and the second reference signal are in a same band combination.

In a possible design, that the first reference signal and the second reference signal are inter-frequency reference signals includes: The first reference signal and the second reference signal correspond to different frequencies, or the first reference signal and the second reference signal correspond to different subcarrier spacings.

In a possible design, the method further includes: sending third information to the terminal, where the third information indicates to access the target cell in a random-access-less manner.

It may be understood that the method claimed in the second aspect corresponds to that in the first aspect. For beneficial effects of related technical features in the second aspect, refer to the descriptions of the first aspect. Details are not described again.

**According to a third aspect,** an embodiment of this application provides a communication method. The method may be applied to a terminal or a module (for example, a chip or a circuit) in the terminal. For example, the method is applied to the terminal. In the method, the terminal receives first information, where the first information indicates to determine a TA of a first cell based on a downlink timing difference; the terminal receives second information, where the second information indicates that the first cell is a target cell for handover; and the terminal accesses the target cell by using the TA of the target cell, where the TA of the target cell is determined based on a TA of a second cell and a downlink timing difference between the first cell and the second cell.

According to the foregoing method, a network device may indicate, by using additional information (that is, the first information), whether to determine the TA of the first cell based on the downlink timing difference, to improve indication flexibility of the network device.

In a possible design, the method further includes: receiving third information, where the third information indicates to determine the TA of the first cell based on the downlink timing difference between the first cell and the second cell.

In this way, the network device may indicate, by using the third information, a specific cell whose downlink timing difference with the first cell is used to determine the TA of the first cell.

In a possible design, the third information includes an identifier of the second cell.

In a possible design, the method further includes: sending first capability information, where the first capability information indicates that the terminal supports determining a TA based on intra-frequency reference signals, and a first reference signal and a second reference signal are intra-frequency reference signals.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the method further includes: sending second capability information, where the second capability information indicates that the terminal supports determining a TA based on inter-frequency reference signals, and a first reference signal and a second reference signal are inter-frequency reference signals.

In a possible design, the second capability information further indicates at least one band combination, each band combination includes at least one band, and frequencies corresponding to the first reference signal and the second reference signal are in a same band combination.

In a possible design, that the first reference signal and the second reference signal are inter-frequency reference signals includes: The first reference signal and the second reference signal correspond to different frequencies, or the first reference signal and the second reference signal correspond to different subcarrier spacings.

**According to a fourth aspect,** an embodiment of this application provides a communication method. The method may be applied to a network device or a chip in the network device. For example, the method is applied to the network device. In the method, the network device sends first information, where the first information indicates to determine a TA of a first cell based on a downlink timing difference; and the network device sends second information, where the second information indicates that the first cell is a target cell for handover, and the TA of the first cell is used to access the target cell.

In a possible design, the method further includes: sending third information, where the third information indicates to determine the TA of the first cell based on a downlink timing difference between the first cell and a second cell.

In a possible design, the third information includes an identifier of the second cell.

In a possible design, the method further includes: receiving first capability information, where the first capability information indicates that a terminal supports determining a TA based on intra-frequency reference signals; and sending the first information includes: sending the first information based on the first capability information, configuration information of a first reference signal, and configuration information of a second reference signal, where the configuration information of the first reference signal and the configuration information of the second reference signal indicate that the first reference signal and the second reference signal are intra-frequency reference signals.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the method further includes: receiving second capability information, where the second capability information indicates that a terminal supports determining a TA based on inter-frequency reference signals; and sending the first information includes: sending the first information based on the second capability information, configuration information of a first reference signal, and configuration information of a second reference signal, where the configuration information of the first reference signal and the configuration information of the second reference signal indicate that the first reference signal and the second reference signal are inter-frequency reference signals.

In a possible design, the second capability information further indicates at least one band combination, each band combination includes at least one band, and frequencies corresponding to the first reference signal and the second reference signal are in a same band combination.

In a possible design, that the first reference signal and the second reference signal are inter-frequency reference signals includes: The first reference signal and the second reference signal correspond to different frequencies, or the first reference signal and the second reference signal correspond to different subcarrier spacings.

It should be understood that, for beneficial effects of related technical features in the third aspect and the fourth aspect, refer to the descriptions of the first aspect. Details are not described again.

**According to a fifth aspect,** an embodiment of this application provides a communication method. The method may be applied to a communication apparatus. The communication apparatus may be a CU or a chip in the CU, or a DU or a chip in the DU. In the method, a communication apparatus obtains configuration information of a first reference signal of a first cell and configuration information of a second reference signal of a second cell; and the communication apparatus sends first information based on the configuration information of the first reference signal and the configuration information of the second reference signal, where the first information indicates that the first reference signal and the second reference signal belong to a same group, and the first reference signal and the second reference signal are used to measure a TA of the first cell or the second cell.

In a possible design, the method further includes: receiving first capability information, where the first capability information indicates that a terminal supports determining a TA based on intra-frequency reference signals; and sending the first information based on the configuration information of the first reference signal and the configuration information of the second reference signal includes: sending the first information based on the first capability information, the configuration information of the first reference signal, and the configuration information of the second reference signal, where the configuration information of the first reference signal and the configuration information of the second reference signal indicate that the first reference signal and the second reference signal are intra-frequency reference signals.

In a possible design, if the communication apparatus is the CU or the chip in the CU, obtaining the configuration information of the first reference signal of the first cell and the configuration information of the second reference signal of the second cell includes: receiving the configuration information of the first reference signal and the configuration information of the second reference signal.

In a possible design, if the communication apparatus is the CU or the chip in the CU, the method further includes: sending first request information and second request information, where the first request information includes first frequency information and/or first subcarrier information, and the first request information is used to request to configure the first reference signal of the first cell based on the first frequency information and/or the first subcarrier information, the second request information includes second frequency information and/or second subcarrier information, and the second request information is used to request to configure the second reference signal of the second cell based on the second frequency information and/or the second subcarrier information, and the first frequency information is the same as the second frequency information, or the first subcarrier information is the same as the second subcarrier information.

In a possible design, if the communication apparatus is the DU or the chip in the DU, the method further includes: receiving first request information and second request information, where the first request information includes first frequency information and/or first subcarrier information, and the second request information includes second frequency information and/or second subcarrier information, and obtaining the configuration information of the first reference signal of the first cell and the configuration information of the second reference signal of the second cell includes: configuring the first reference signal of the first cell based on the first frequency information and/or the first subcarrier information, and configuring the second reference signal of the second cell based on the second frequency information and/or the second subcarrier information, where the first frequency information is the same as the second frequency information, or the first subcarrier information is the same as the second subcarrier information.

In a possible design, the method further includes: receiving second capability information, where the second capability information indicates that a terminal supports determining a TA based on inter-frequency reference signals; and sending the first information based on the configuration information of the first reference signal and the configuration information of the second reference signal includes: sending the first information based on the second capability information, the configuration information of the first reference signal, and the configuration information of the second reference signal, where the configuration information of the first reference signal and the configuration information of the second reference signal indicate that the first reference signal and the second reference signal are inter-frequency reference signals.

In a possible design, the second capability information further indicates at least one band combination, each band combination includes at least one band, and frequencies corresponding to the first reference signal and the second reference signal are in a same band combination.

In a possible design, if the communication apparatus is the CU or the chip in the CU, the method further includes: sending first request information and second request information, where the first request information includes first frequency information and/or first subcarrier information, and the first request information is used to request to configure the first reference signal of the first cell based on the first frequency information and/or the first subcarrier information, the second request information includes second frequency information and/or second subcarrier information, and the second request information is used to request to configure the second reference signal of the second cell based on the second frequency information and/or the second subcarrier information, and the first frequency information is different from the second frequency information, or the first subcarrier information is different from the second subcarrier information.

In a possible design, if the communication apparatus is the DU or the chip in the DU, the method further includes: receiving first request information and second request information, where the first request information includes first frequency information and/or first subcarrier information, and the second request information includes second frequency information and/or second subcarrier information, and obtaining the configuration information of the first reference signal of the first cell and the configuration information of the second reference signal of the second cell includes: configuring the first reference signal of the first cell based on the first frequency information and/or the first subcarrier information, and configuring the second reference signal of the second cell based on the second frequency information and/or the second subcarrier information, where the first frequency information is different from the second frequency information, or the first subcarrier information is different from the second subcarrier information.

**According to a sixth aspect,** this application provides a communication apparatus. The communication apparatus has a function of implementing the method in the first aspect to the fifth aspect. For example, the communication apparatus includes a corresponding module, unit, or means for performing an operation in the first aspect to the fifth aspect. The function, unit, or means may be implemented by software, may be implemented by hardware, or may be implemented by hardware by executing corresponding software.

In a possible design, the communication apparatus includes a processing unit and a communication unit. The communication unit may be configured to receive a signal and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the fifth aspect.

In a possible design, the communication apparatus includes a processor, and the processor may be configured to be coupled to a memory. The memory may store a necessary computer program or instructions for implementing the functions in the first aspect to the fifth aspect. The processor may execute the computer program or the instructions stored in the memory. When the computer program is executed or the instructions are executed, the communication apparatus is caused to implement the method in any possible design or implementation in the first aspect to the fifth aspect.

In a possible design, the communication apparatus includes a processor and a memory. The memory may store a necessary computer program or instructions for implementing the functions in the first aspect to the fifth aspect. The processor may execute the computer program or the instructions stored in the memory. When the computer program is executed or the instructions are executed, the communication apparatus is caused to implement the method in any possible design or implementation in the first aspect to the fifth aspect.

In a possible design, the communication apparatus includes a processor and an interface circuit. The processor is configured to communicate with another apparatus through the interface circuit, and perform the method in any possible design or implementation in the first aspect to the fifth aspect.

It may be understood that, in the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a seventh aspect,** this application provides a communication system. The communication system may include a terminal and a network device. The terminal is configured to perform the method according to the first aspect, and the network device is configured to perform the method according to the second aspect. Alternatively, the terminal is configured to perform the method according to the third aspect, and the network device is configured to perform the method according to the fourth aspect.

**According to an eighth aspect,** this application provides a computer-readable storage medium. The computer storage medium stores computer-readable instructions. When a computer reads and executes the computer-readable instructions, the computer is caused to perform the method in any possible design in the first aspect to the fifth aspect.

**According to a ninth aspect,** this application provides a computer program product. When a computer reads and executes the computer program product, the computer is caused to perform the method in any possible design in the first aspect to the fifth aspect.

**According to a tenth aspect,** this application provides a chip. The chip includes a processor. The processor is coupled to a memory, and is configured to read and execute a software program stored in the memory, to implement the method in any possible design in the first aspect to the fifth aspect.

These aspects or another aspect of this application is clearer and more comprehensible in descriptions of the following embodiments.

BRIEF DESCRIPTION OF DRAWINGS

FIG. 1 is a diagram of a communication system to which an embodiment of this application is applicable;

FIG. 2A is a diagram of a CU-DU split architecture according to an embodiment of this application;

FIG. 2B is a diagram of another CU-DU split architecture according to an embodiment of this application;

FIG. 3 is a diagram of a timing advance according to an embodiment of this application;

FIG. 4 is a diagram of downlink timing according to an embodiment of this application;

FIG. 5 is a diagram of determining a TA based on a downlink timing difference according to an embodiment of this application;

FIG. 6 is a schematic flowchart corresponding to a communication method according to Embodiment 1 of this application;

FIG. 7 is a schematic flowchart corresponding to a communication method according to Embodiment 2 of this application;

FIG. 8 is a schematic flowchart corresponding to a communication method according to Embodiment 3 of this application;

FIG. 9 is a schematic flowchart corresponding to a communication method according to Embodiment 4 of this application;

FIG. 10 is a possible example block diagram of an apparatus according to an embodiment of this application;

FIG. 11 is a diagram of a structure of a network device according to an embodiment of this application; and

FIG. 12 is a diagram of a structure of a terminal according to an embodiment of this application.

## DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

A communication system and a service scenario described in embodiments of this application are intended to describe the technical solutions in embodiments of this application more clearly, and do not constitute a limitation to the technical solutions provided in embodiments of this application. A person of ordinary skill in the art may learn that, with evolution of a network architecture and emergence of a new service scenario, the technical solutions provided in embodiments of this application are also applicable to similar technical problems.

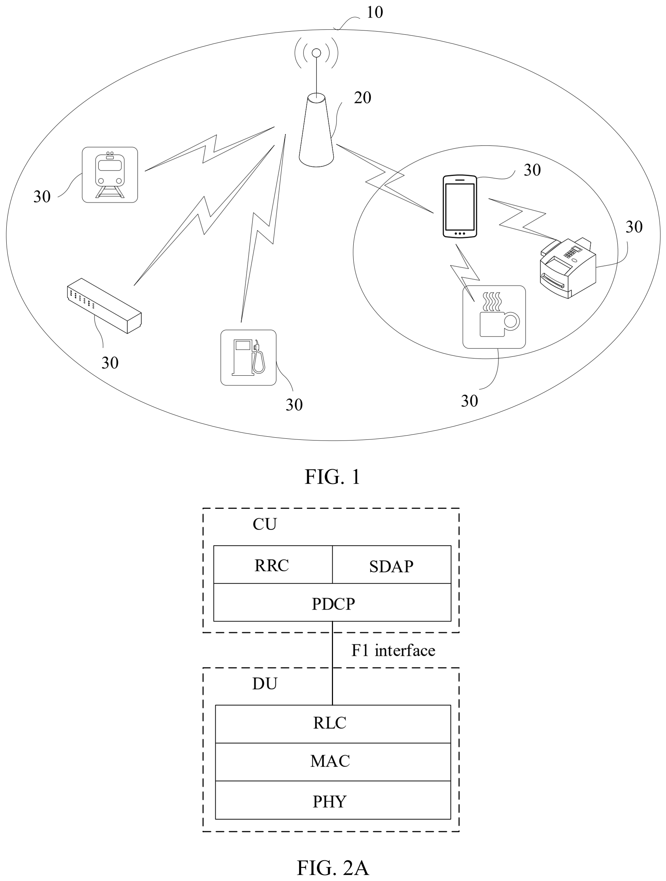

For ease of understanding embodiments of this application, a communication system shown in FIG. 1 is first used as an example to describe in detail a communication system applicable to embodiments of this application. As shown in FIG. 1, the communication system 10 includes one or more network devices 20 and one or more terminals 30. An interface between the network device and the terminal may be a Uu interface (or referred to as an air interface), and data transmission may be performed between the network device 20 and the terminal 30 by using an air interface resource. For example, the terminal may be located in a communication coverage area of one or more cells of the network device, and there may be one or more cells (that is, serving cells of the terminal) that provide services for the terminal. When there are a plurality of serving cells of the terminal, the terminal may work in one or more of transmission technologies such as carrier aggregation (carrier aggregation, CA), dual connectivity (dual connectivity, DC), coordinated multipoint (coordinated multipoint, CoMP) transmission, and multiple transmission and reception point (multiple transmission and reception point, mTRP).

(1) Terminal

The terminal may be a terminal that accesses the communication system and that has a wireless transceiver function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

(2) Network device

The network device is a device that is located on a network side of the communication system and that has a wireless transceiver function, or a chip or a chip system that may be disposed in the device.

For example, the network device in embodiments of this application may be an access point (access point, AP) in a Wi-Fi system, for example, a home gateway, a router, a server, a switch, or a bridge. The network device may be a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a radio relay node, a radio backhaul node, a transmission point (transmission and reception point, TRP, or a transmission point, TP), or the like. The network device may alternatively be a next-generation NodeB (next generation NodeB, gNB) in a 5G system, a network node that forms a gNB, for example, a central unit (central unit, CU), a distributed unit (distributed unit, DU), or a road side unit (road side unit, RSU) having a base station function. The network device may alternatively be a satellite or a base station in various forms in the future.

(3) Communication between a terminal and a network device

Communication between the terminal and the network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a medium access control (medium access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

Using downlink data transmission as an example, downlink data may be correspondingly encapsulated at each layer of the network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal, after a physical layer of the terminal receives a transport block from the network device, the transport block may be sequentially submitted from the physical layer to upper layers, and may be correspondingly decapsulated at each layer. In other words, processing performed at each layer of the terminal may be an inverse process of processing performed at each layer of the network device.

(4) CU-DU split architecture

For example, in some possible network structures, the network device may include one or more central units (central unit, CU) and one or more distributed units (distributed unit, DU). A plurality of DUs may be centrally controlled by one CU. Such an architecture may be referred to as a CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

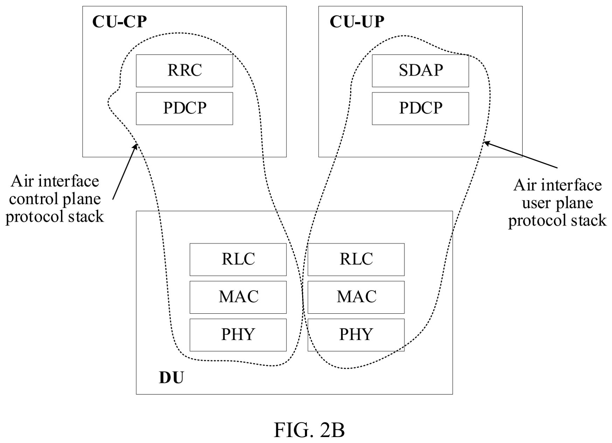

Further, a function of the CU may be implemented by a same entity, or may be implemented by different entities. For example, functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs. This improves flexibility of the CU-CP. FIG. 2B is a diagram of air interface protocol stack distribution. As shown in FIG. 2B, for both a user plane and a control plane, an air interface protocol stack may be that RLC, MAC, and PHY are on a DU, and PDCP and upper protocol layers are on a CU.

It should be noted that in the architectures shown in FIG. 2A and FIG. 2B, signaling generated by the CU may be sent to a terminal through the DU, or signaling generated by a terminal may be sent to the CU through the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be physical layer data and is sent to the terminal, or is converted from received physical layer data. In this architecture, the signaling at the RRC layer or the PDCP layer may also be considered as being sent by the DU, or sent by the DU and a radio frequency apparatus.

It may be understood that a quantity of network devices and a quantity of terminals included in a communication system are not limited in embodiments of this application. In addition to the network device and the terminal, the communication system may further include another device or network element, for example, a core network device or a relay device. This is not limited in embodiments of this application.

The following first explains and describes related technical features in embodiments of this application. It should be noted that these explanations are intended to make embodiments of this application easier to understand, but should not be considered as a limitation on the protection scope claimed in this application.

## 1. Cell handover

The cell handover is a very important feature in a communication system, and is mainly triggered by movement of a terminal when the terminal is in an RRC connected state. For example, a serving cell of the terminal is a cell 1. If the terminal moves to a cell 2, and signal quality of the cell 2 is higher than signal quality of the cell 1, the cell handover may be triggered, so that the terminal is handed over from the cell 1 to the cell 2. A basic objective of the cell handover is to hand over the terminal to a neighboring cell with good signal quality before signal quality of the serving cell becomes incapable of supporting communication, to provide continuous and uninterrupted communication services, and effectively prevent a call drop caused by deterioration of the serving cell.

The cell handover may include first type of cell handover and second type of cell handover. The first type of cell handover is cell handover implemented based on a layer 1/layer 2, and may be referred to as layer 1/layer 2 handover or layer 1/layer 2 triggered mobility (L1/L2 triggered mobility, LTM). The second type of cell handover is cell handover implemented based on a layer 3, and may be referred to as layer 3 handover (L3 handover). The layer 1 may be a physical layer, the layer 2 may be any one or more of a MAC layer, an RLC layer, a PDCP layer, and an SDAP layer, and the layer 3 may be an RRC layer. It should be noted that the layer 1/layer 2 handover may also be understood as layer 1 handover and/or layer 2 handover. When a relationship is "and", operations related to a handover process are mainly performed by the layer 1 and the layer 2 together. When the relationship is "or", the operations related to the handover process are mainly performed by the layer 1 or the layer 2. Because the layer 1 and the layer 2 are lower than the RRC layer (the layer 3) in a protocol stack, the layer 1/layer 2 handover may also be referred to as low-layer handover, bottom-layer handover, or lower-layer handover. A name of a specific handover technology is not limited in this application.

For the layer 3 handover, in a CU-DU split architecture, a CU receives a measurement result (where the measurement result is forwarded by a DU to the CU) of the terminal, determines, based on the measurement result, whether to initiate handover, and if determining to initiate the handover, sends a handover command to the DU, and the DU sends the handover command to the terminal. This process involves communication interaction (that is, interaction on an F1 interface) between the CU and the DU, and a maximum transmission delay of the F1 interface is approximately 3 ms to 10 ms. Consequently, a specific handover delay is caused.

However, a layer 1/layer 2 handover decision is delivered from the CU to the DU. To be specific, the DU determines, based on a measurement result of the terminal, whether to initiate handover (LTM cell switch), and directly sends a handover command to the terminal, so that F1 interaction can be effectively reduced, and a handover delay can be reduced.

## 2. Cell handover scenarios

As described above, a network device may include one or more CUs and one or more DUs. For example, the network device includes one CU and a plurality of DUs. The plurality of DUs may be centrally controlled by the CU, and each of the plurality of DUs may include one or more cells. It may be understood that "the DU includes one or more cells" may also be described as "the DU manages or controls one or more cells", "one or more cells of the DU", or "one or more cells belong to the DU".

When a terminal is handed over between different cells, there may be a plurality of specific handover scenarios. For example, the handover scenarios may be obtained through classification based on a location relationship between a source cell and a target cell. The location relationship between the source cell and the target cell may be whether the source cell and the target cell belong to a same CU and/or a same DU. Three possible handover scenarios, that is, a scenario 1 to a scenario 3, are described herein.

Scenario 1: The terminal is handed over from a cell of a DU to another cell of the DU. In other words, the source cell and the target cell of the terminal belong to the same DU. Cell handover corresponding to the scenario 1 is intra-DU (intra-DU) handover.

Scenario 2: The terminal is handed over from a cell of a DU 1 controlled by a CU to a cell of a DU 2 controlled by the CU. In this case, the DU 1 may be referred to as a source DU, and the DU 2 may be referred to as a target DU. In other words, the source cell and the target cell of the terminal belong to different DUs controlled by the same CU. Cell handover corresponding to the scenario 2 is inter-DU (inter-DU) handover.

Scenario 3: The terminal is handed over from a cell of a DU 1 controlled by a CU 1 to a cell of a DU 3 controlled by a CU 2. In this case, the CU 1 may be referred to as a source CU, and the CU 2 may be referred to as a target CU. In other words, the source cell and the target cell of the terminal belong to different DUs controlled by different CUs. Cell handover corresponding to the scenario 2 is inter-CU (inter-CU) handover.

For example, the intra-DU handover and the inter-DU handover may be implemented through layer 1/layer 2 handover, and the inter-CU handover may be implemented through layer 3 handover. In embodiments of this application, the layer 1/layer 2 handover is used as an example for description below.

## 3. Timing advance

The timing advance (that is, a TA) is used for uplink synchronization between a terminal and a network device. The TA may be a cell-level parameter, and each cell has a corresponding TA. For example, the terminal may send an uplink signal to the network device by using a TA of a cell 1.

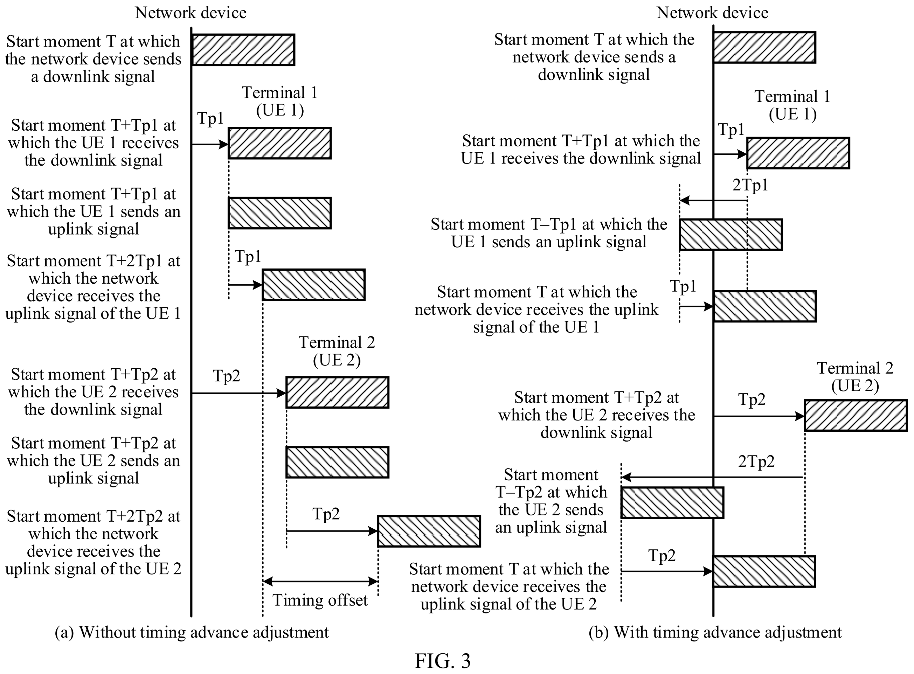

A terminal 1 and a terminal 2 are used as an example. As shown in (a) in FIG. 3, signal propagation between the network device (for example, a DU) and the terminal is delayed, an interval between a start moment at which the network device sends a downlink signal and a start moment at which the terminal 1 receives the downlink signal is Tp1, and an interval between the start moment at which the network device sends the downlink signal and a start moment at which the terminal 2 receives the downlink signal is Tp2. If the terminal 1 does not perform uplink timing adjustment, and sends an uplink signal to the network device by using the start moment at which the terminal 1 receives the downlink signal as a reference, an interval between a start moment at which the terminal 1 sends the uplink signal and a start moment at which the network device receives the uplink signal is also Tp1. Therefore, for the terminal 1, there is a time difference of 2Tp1 between the start moment at which the network device sends the downlink signal and the start moment at which the network device receives the uplink signal. Similarly, for the terminal 2, there is a time difference of 2Tp2 between the start moment at which the network device sends the downlink signal and a start moment at which the network device receives an uplink signal.

Because distances between terminals and the network device may be different, uplink signals of different terminals arrive at the network device at different time points. When an offset between the arrival time points of the uplink signals of the different terminals is greater than a cyclic prefix (cyclic prefix, CP) of an orthogonal frequency division multiplexing (orthogonal frequency division multiplexing, OFDM) symbol, the different terminals interfere with each other. To resolve a problem of interference between the terminals, the terminals need to perform timing adjustment to implement uplink synchronization. As shown in (b) in FIG. 3, the terminal 1 advances the start moment at which the terminal 1 sends the uplink signal by 2Tp1, in other words, a TA used by the terminal 1 is 2Tp1; and the terminal 2 advances the start moment at which the terminal 2 sends the uplink signal by 2Tp2, in other words, a TA used by the terminal 2 is 2Tp2. In this case, the network device receives the uplink signals of the terminal 1 and the terminal 2 at a same moment, so that the problem of mutual interference between the terminals can be resolved.

## 4. Downlink timing

The downlink timing is used for downlink synchronization between a terminal and a network device. The downlink timing may be a cell-level parameter, and each cell has corresponding downlink timing. The downlink timing is defined as a time point at which a first path (in terms of time) of a corresponding downlink frame used by the terminal to determine the downlink timing is received from a reference cell at an antenna of the UE. For details, refer to an existing protocol.

A 5G communication system is used as an example. A slot may be used as a basic time unit for uplink and downlink transmission, to be specific, data transmission is performed once in each slot. A slot start moment of the network device is fixed, and uplink and downlink slots are aligned. For downlink transmission, when a downlink signal sent by the network device arrives at a terminal side through air propagation, there is a propagation delay. For example, a signal propagation delay between a DU 1 to which a cell A belongs and the terminal is Tp1, and a signal propagation delay between a DU 2 to which a cell B belongs and the terminal is Tp2.

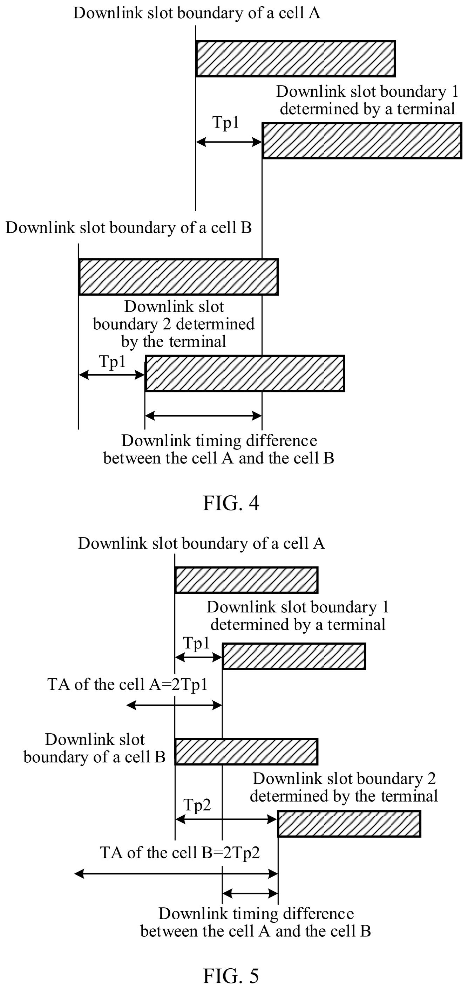

As shown in FIG. 4, a downlink signal 1 sent by the DU 1 at a downlink slot boundary of the cell A arrives at the terminal after Tp1, and the terminal determines a downlink slot boundary 1 based on the received downlink signal 1. There is a time difference of Tp1 between the downlink slot boundary of the cell A and the downlink slot boundary 1 determined by the terminal. A downlink signal 2 sent by the DU 2 at a downlink slot boundary of the cell B arrives at the terminal after Tp2, and the terminal determines a downlink slot boundary 2 based on the received downlink signal 2. There is a time difference of Tp2 between the downlink slot boundary of the cell B and the downlink slot boundary 2 determined by the terminal. Further, a time difference between a downlink slot boundary (for example, the downlink slot boundary 1) determined by the terminal for the cell A and a downlink slot boundary (for example, the downlink slot boundary 2) determined by the terminal for the cell B is a downlink timing difference between the cell A and the cell B.

It may be understood that the downlink slot boundary may also be replaced with a downlink frame boundary.

## 5. Measurement gap

Terminal measurement may be classified into intra-frequency measurement (intra-frequency measurement) and inter-frequency measurement (inter-frequency measurement). The intra-frequency measurement refers to that a cell in which a terminal is currently located and a to-be-measured cell are on a same frequency, and the inter-frequency measurement refers to that the cell in which the terminal is currently located and the to-be-measured cell are not on a same frequency.

If the terminal needs to perform inter-frequency measurement (including inter-RAT measurement), a simple manner is to install two radio frequency receivers in the terminal, which respectively measure a frequency of the current cell and a frequency of the to-be-measured cell. However, this causes problems of an increase in costs and mutual interference between different frequencies. Therefore, a measurement gap (measurement gap) manner is proposed at present, to be specific, a part of time (referred to as a measurement gap) is reserved. In the measurement gap, the terminal may not send or receive data, but switch a frequency of the radio frequency receiver to the frequency of the to-be-measured cell, to perform inter-frequency measurement. At the end of the measurement gap, the terminal switches the frequency of the radio frequency receiver to the frequency of the current cell.

For example, the measurement gap may be configured by a network device for the terminal. For example, the network device may configure a measurement gap parameter for the terminal, so that the terminal can determine the measurement gap based on the measurement gap parameter, and perform inter-frequency measurement in the measurement gap.

Based on the descriptions of the foregoing related technical features, related implementations in which a terminal determines a TA of a target cell are studied in embodiments of this application.

Generally, for cell handover, the terminal may obtain the TA of the target cell by sending a random access preamble or an uplink reference signal. The uplink reference signal may be, for example, a sounding reference signal (sounding reference signal, SRS). The following describes two possible manners, that is, a manner 1 and a manner 2.

Manner 1: After receiving a handover command, the terminal may send, in the target cell, the random access preamble or the uplink reference signal to a network device, so that the network device can measure the TA of the target cell based on the random access preamble or the uplink reference signal, and send a timing advance command to the terminal by using a random access response message. Correspondingly, the terminal may obtain the TA of the target cell based on the timing advance command.

Manner 2: Before performing the cell handover (or before receiving a handover command), the terminal may send, in one or more candidate cells, the random access preamble or the uplink reference signal to a network device, to obtain and store TAs of the one or more candidate cells. For example, the one or more candidate cells include a cell 1, and the terminal may send, in the cell 1, the random access preamble or the uplink reference signal to the network device based on a set periodicity, to obtain and store a TA of the cell 1. The TA of the cell 1 stored by the terminal may be a recently obtained TA of the cell 1. Further, after the terminal receives the handover command, where for example, the handover command indicates that the cell 1 is the target cell, the terminal may access the target cell based on the stored TA of the cell 1, and does not need to send the random access preamble or the uplink reference signal to the network device to obtain the TA of the cell 1.

However, in the foregoing manner 1, when the terminal initiates random access to the target cell, communication of the terminal is interrupted, and communication of the terminal can be restored only after the terminal completes random access to the target cell. Consequently, a long interruption delay is caused. In the foregoing manner 2, after receiving the handover command, the terminal may access the target cell based on a previously obtained TA. However, the terminal needs to initiate a large quantity of times of random access in the candidate cell. This causes high communication resource overheads.

Based on this, in embodiments of this application, the TA of the target cell is determined based on a downlink timing difference, so that random access is reduced during the cell handover, and the interruption delay is reduced. In embodiments of this application, "determining a TA based on a downlink timing difference" may also be referred to as "UE-based TA measurement (UE-based TA measurement)".

For example, the target cell is a cell A. (1) If downlink slot boundaries of the cell A and a cell B (where the cell B may be a source cell of the terminal) are synchronous, as shown in FIG. 5, determining a TA of the cell A based on a downlink timing difference may be implemented by using the following Formula 1:

$$TA\_targetcell = TA\_sourcecell + 2*(Tnew–Told) \text{ Formula 1}$$

*TA_targetcell* represents the TA of the cell A, *TA_sourcecell* represents a TA of the cell B, *Tnew-Told* is a downlink timing difference between the cell A and the cell B, *Tnew* is downlink timing of the cell A, and *Told* is downlink timing of the cell B.

The foregoing Formula 1 may alternatively be changed to:

$$TA\_targetcell = TA\_sourcecell – 2*(Told–Tnew)$$

**(2)** If downlink slot boundaries of the cell A and a cell B (where the cell B may be a source cell of the terminal) are asynchronous, determining a TA of the cell A based on a downlink timing difference may be implemented by using the following Formula 2:

$$TA\_targetcell = TA\_sourcecell + 2*(Tnew–Told) + offset \text{ Formula 2}$$

*offset* represents an offset between the downlink slot boundaries of the cell A and the cell B.

In addition, whether the downlink slot boundaries of the cell A and the cell B are synchronized, and the offset between the downlink slot boundaries of the cell A and the cell B may be indicated by the network device to the terminal. A specific implementation is not limited.

The following describes, in detail with reference to Embodiment 1 to Embodiment 4, a communication method provided in embodiments of this application.

## Embodiment 1

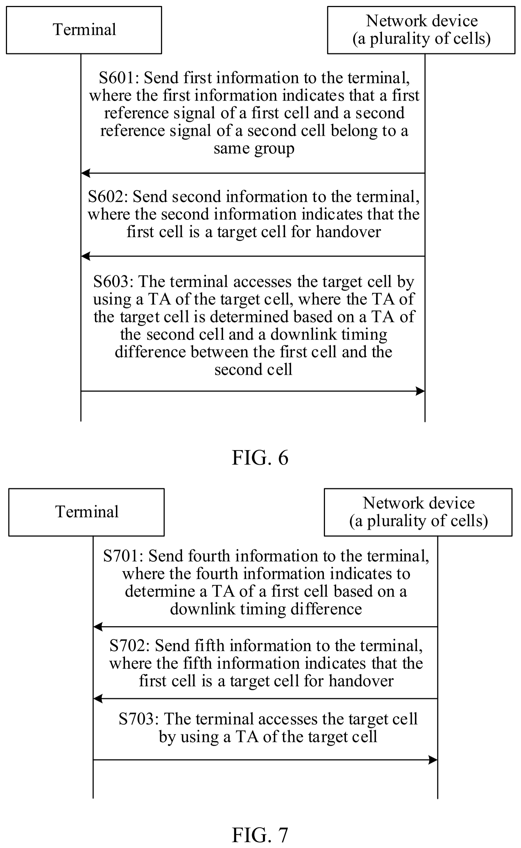

**FIG. 6** is a schematic flowchart corresponding to a communication method according to Embodiment 1 of this application. As shown in FIG. 6, the method includes the following steps.

**S601:** A network device sends first information to a terminal, where the first information indicates that a first reference signal of a first cell and a second reference signal of a second cell belong to a same group; and correspondingly, the terminal receives the first information.

(1) The group is described.

For example, the network device may determine a group to which reference signals of a plurality of cells belong, and send the first information to the terminal. The first information may be understood as group information. There are a plurality of specific implementations in which the network device sends the first information to the terminal. For example, the network device may send the first information to the terminal by using an RRC message or a layer 1/layer 2 message.

The following uses an example in which the plurality of cells include the first cell, the second cell, a third cell, and a fourth cell.

For example, if the network device determines that the first reference signal of the first cell and the second reference signal of the second cell belong to the same group, and a third reference signal of the third cell and a fourth reference signal of the fourth cell belong to a same group, the first information may indicate that the first reference signal of the first cell and the second reference signal of the second cell belong to the same group (referred to as a group 1), and the third reference signal of the third cell and the fourth reference signal of the fourth cell belong to the same group (referred to as a group 2). For example, the first information may include a parameter corresponding to the group 1 and a parameter corresponding to the group 2. The parameter corresponding to the group 1 is used as an example. The parameter corresponding to the group 1 may include: an index of the first reference signal and an index of the second reference signal; an identifier of the first cell and an identifier of the second cell; or configuration information of the first reference signal and configuration information of the second reference signal.

For another example, if the network device determines that the first reference signal, the second reference signal, the third reference signal, and the fourth reference signal belong to a same group, the first information may indicate that the first reference signal, the second reference signal, the third reference signal, and the fourth reference signal belong to the same group.

It may be understood that: ① The first cell in the plurality of cells is used as an example. The first reference signal of the first cell is used to measure downlink timing of the first cell (or is used to implement UE-based TA measurement). The first reference signal may be a specific reference signal configured by the network device for the first cell, and the specific reference signal is dedicated to measuring the downlink timing of the first cell. Alternatively, the first reference signal may reuse another reference signal configured by the network device for the cell. That is, in addition to the downlink timing of the first cell, the first reference signal may be further used to measure other possible information. In addition, the first cell and another cell may share the first reference signal. In other words, the first reference signal may be used to measure the downlink timing of the first cell, or may be used to measure downlink timing of the another cell.

② One group may include reference signals of two cells, or may include reference signals of more cells. A quantity of reference signals included in one group is not limited in this embodiment of this application.

③ The plurality of cells may include a current serving cell of the terminal (if the terminal has a plurality of serving cells, the plurality of cells may include all current serving cells of the terminal, or may include only a part of the serving cells) and a candidate cell. All the plurality of cells may be cells managed by the network device, and the terminal may perform layer 1/layer 2 handover between the plurality of cells. In other words, the plurality of cells include a cell used by the terminal to perform layer 1/layer 2 handover.

④ The network device may further send other possible information to the terminal. For example, the network device may send configuration information of the reference signals of the plurality of cells to the terminal, so that the terminal receives the reference signals based on the configuration information of the reference signals of the plurality of cells, to measure downlink timing. The configuration information of the reference signals of the plurality of cells and the first information may be carried in a same message, or may be carried in different messages. This is not specifically limited. The first reference signal is used as an example. The configuration information of the first reference signal may include frequency information and/or subcarrier information corresponding to the first reference signal, and may further include other possible information. For example, when the first reference signal is a reference signal shared by the first cell and another cell (for example, the third cell), where for example, the first reference signal is scrambled by using a physical cell identifier of the third cell, the configuration information of the first reference signal may further include an identifier of the third cell.

(2) Implementations in which the network device determines the group are described.

For example, there are a plurality of specific implementations in which the network device determines the group to which the reference signals of the plurality of cells belong. In a possible implementation, the terminal may send capability information of the terminal to the network device, so that the network device can determine, based on the capability information of the terminal and the configuration information of the reference signals of the plurality of cells, the group to which the reference signals of the plurality of cells belong.

Case 1: The capability information of the terminal is first capability information, and the first capability information indicates that the terminal supports determining a TA based on intra-frequency reference signals. In this case, the network device may determine, based on configuration information of the first reference signal to the fourth reference signal, which reference signals are intra-frequency reference signals, classify the intra-frequency reference signals into a same group, and classify inter-frequency reference signals into different groups. For example, the first reference signal and the second reference signal are intra-frequency reference signals, the third reference signal and the fourth reference signal are intra-frequency reference signals, and the first reference signal (or the second reference signal) and the third reference signal (or the fourth reference signal) are inter-frequency reference signals. In this case, the network device may classify the first reference signal and the second reference signal into one group, and classify the third reference signal and the fourth reference signal into another group.

The first reference signal and the second reference signal are used as an example. That the first reference signal and the second reference signal are intra-frequency reference signals may include: The first reference signal and the second reference signal correspond to a same frequency, or the first reference signal and the second reference signal correspond to a same subcarrier spacing. That the first reference signal and the second reference signal are inter-frequency reference signals may include: The first reference signal and the second reference signal correspond to different frequencies, or the first reference signal and the second reference signal correspond to different subcarrier spacings. **In an example**, when the first reference signal and the second reference signal correspond to a same frequency, **and** the first reference signal and the second reference signal correspond to a same subcarrier spacing, the first reference signal and the second reference signal are intra-frequency reference signals; or when the first reference signal and the second reference signal correspond to different frequencies, **or** the first reference signal and the second reference signal correspond to different subcarrier spacings, the first reference signal and the second reference signal are inter-frequency reference signals.

Case 2: The capability information of the terminal is second capability information, and the second capability information indicates that the terminal supports determining a TA based on inter-frequency reference signals. Optionally, the second capability information further indicates at least one band combination supported by the terminal, and each band combination includes at least one band. For example, the at least one band combination includes a band combination 1 and a band combination 2, the band combination 1 includes a band 1, and the band combination 2 includes a band 2 and a band 3. In this case, the network device may determine, based on configuration information of the first reference signal to the fourth reference signal, which reference signals correspond to frequencies in a same band combination, and classify these reference signals into a same group. For example, a frequency corresponding to the first reference signal is in the band 1, a frequency corresponding to the second reference signal is in the band 1, a frequency corresponding to the third reference signal is in the band 2, and a frequency corresponding to the fourth reference signal is in the band 3. That is, the frequencies corresponding to the first reference signal and the second reference signal are in the band combination 1, and the frequencies corresponding to the third reference signal and the fourth reference signal are in the band combination 2. In this case, the network device may classify the first reference signal and the second reference signal into one group, and classify the third reference signal and the fourth reference signal into another group.

In addition, in this example, the frequencies corresponding to the first reference signal and the second reference signal are both in the band 1. Therefore, the first reference signal and the second reference signal may be intra-frequency reference signals, or may be inter-frequency reference signals. In other words, when the terminal supports determining the TA based on inter-frequency reference signals, the network device may classify intra-frequency reference signals into a same group, or may classify inter-frequency reference signals into a same group.

(3) The capability information of the terminal is explained.

As described above, the terminal may support determining the TA based on intra-frequency reference signals, or determining the TA based on inter-frequency reference signals. For example, the terminal supports determining the TA based on intra-frequency reference signals. If the first reference signal and the second reference signal are intra-frequency reference signals, the terminal may obtain the downlink timing of the first cell through measurement based on the first reference signal, obtain downlink timing of the second cell through measurement based on the second reference signal, and obtain a downlink timing difference between the first cell and the second cell. Further, the terminal may determine a TA of the second cell based on a TA of the first cell and the downlink timing difference between the first cell and the second cell, or determine the TA of the first cell based on the TA of the second cell and the downlink timing difference between the first cell and the second cell.

Different terminals may have different capabilities. For example, some terminals support determining a TA based on intra-frequency reference signals, and some terminals support determining a TA based on inter-frequency reference signals. There are a plurality of reasons why different terminals have different capabilities. This is not limited in this embodiment of this application. For example, in a 5G communication system, lengths of time units (for example, symbols or slots) corresponding to different subcarrier spacings may be different. For example, when a subcarrier spacing of a frequency domain resource is 15 kHz, a corresponding symbol length is $1/15$ kHz=66.7 $\mu$s, and a slot length is 1 ms; or when a subcarrier spacing of a frequency domain resource is 30 kHz, a corresponding symbol length is $1/30$ kHz, and a slot length is 0.5 ms. When the first reference signal and the second reference signal are inter-frequency reference signals, precision of the downlink timing of the first cell that is obtained by the terminal through measurement based on the first reference signal may be different from precision of the downlink timing of the second cell that is obtained by the terminal through measurement based on the second reference signal. Consequently, the calculated downlink timing difference between the first cell and the second cell is not accurate enough. As a result, the determined TA is inaccurate. Therefore, if a processing capability of the terminal is strong, even if the first reference signal and the second reference signal are inter-frequency reference signals, a relatively accurate downlink timing difference can be calculated, and the terminal may support determining the TA based on inter-frequency reference signals. If a processing capability of the terminal is limited, when the first reference signal and the second reference signal are inter-frequency reference signals, a calculated downlink timing difference may not be accurate enough, and the terminal may support determining the TA based on intra-frequency reference signals, but does not support determining the TA based on inter-frequency reference signals.

**S602:** The network device sends second information to the terminal, where the second information indicates that the first cell is a target cell for handover.

For example, the network device may send a layer 1/layer 2 handover command (that is, an LTM command) to the terminal, where the handover command includes the second information. For example, the second information is a target cell field in the handover command, and the target cell field carries the identifier of the first cell. The second information and the first information may be carried in a same message, for example, both carried in the handover command. Alternatively, the second information and the first information may be carried in different messages. For example, the second information is carried in the handover command, and the first information is carried in an RRC message.

In addition, optionally, the network device may further send third information to the terminal, where the third information indicates to access the target cell in a random-access-less manner. "Random-access-less" may also be referred to as "random access channel (random access channel, RACH)-skip (RACH-skip)" or "sending no random access signal". For example, based on the group information, if it is determined that the target cell and a serving cell (for example, the source cell) from which the terminal is handed over belong to a same group, the network device may send the third information to the terminal; otherwise, the network device may not send the third information. Certainly, after determining that the target cell and the serving cell (for example, the source cell) from which the terminal is handed over belong to the same group, the network device may further determine, based on some other possible reasons, whether to send the third information.

For example, the third information and the second information may be carried in a same message, for example, both carried in the handover command; or may be carried in different messages.

S603: The terminal accesses the target cell by using the TA of the target cell.

The TA of the target cell is determined by the terminal based on the TA of the second cell and the downlink timing difference between the first cell and the second cell. The second cell may be the serving cell (for example, the source cell) from which the terminal is handed over. After the terminal accesses the target cell by using the TA of the target cell, the serving cell of the terminal is changed from the second cell to the first cell.

For example, after determining, based on the first information, that the first reference signal and the second reference signal belong to the same group, the terminal may measure the downlink timing of the first cell based on the first reference signal, and measure the downlink timing of the second cell based on the second reference signal, to determine the TA of the first cell based on the TA of the second cell and the downlink timing difference between the first cell and the second cell. Subsequently, after receiving the second information (and the third information), the terminal may directly access the first cell based on the determined TA of the first cell. In this way, handover efficiency can be improved. Certainly, the terminal may alternatively measure, after receiving the second information (and the third information), the downlink timing of the first cell and the downlink timing of the second cell (or determine the TA of the first cell based on the TA of the second cell and the downlink timing difference between the first cell and the second cell). In other words, time when the terminal measures the downlink timing of the first cell and the downlink timing of the second cell, and time when the terminal determines the TA of the first cell based on the downlink timing difference may depend on an internal implementation of the terminal. This is not limited in this embodiment of this application.

In addition, optionally, if the network device configures a measurement gap for the terminal, before the terminal receives a feedback in the target cell, the terminal may not use the measurement gap, but continuously monitor the target cell. After the terminal receives the feedback in the target cell, the terminal can use the measurement gap to measure another cell or frequency.

It may be understood that, in another possible embodiment, if the network device sends the first information and the second information to the terminal, but does not send the third information (or the terminal receives the first information and the second information from the network device, but does not receive the third information), the terminal may determine the TA of the target cell in a manner (for example, the foregoing manner 1 or manner 2) in the conventional technology, and access the target cell. In other words, when the terminal accesses the target cell, whether to use the TA that is of the target cell and that is determined based on the downlink timing difference may be controlled by the network device, so that the network device can flexibly manage and control the terminal.

The foregoing is described by using an example in which the terminal is handed over from the second cell to the first cell. The group information in this embodiment of this application is also applicable to a continuous handover scenario. For example, the group information indicates that the first reference signal to the fourth reference signal belong to a same group. After the terminal is handed over from the second cell to the first cell, the network device may send the layer 1/layer 2 handover command to the terminal, where the handover command includes the second information and the third information, the second information indicates that the third cell is the target cell for handover, and the third information indicates to access the target cell in the random-access-less manner. Correspondingly, after determining, based on the group information, that the first cell and the third cell belong to a same group, the terminal may determine a TA of the third cell based on the TA of the first cell and a downlink timing difference between the first cell and the third cell, and access the third cell by using the TA of the third cell.

According to the foregoing method, the network device indicates, to the terminal by using the first information, that the first reference signal of the first cell and the second reference signal belong to the same group, so that the terminal can determine the TA of the target cell based on the TA of the second cell, the first reference signal, and the second reference signal, and does not need to obtain the TA of the target cell through random access. This reduces random access during cell handover and further reduces an interruption delay. In addition, the group information of the reference signal may be determined by the network device based on the capability information of the terminal, so that the group information of the reference signal is more appropriate, thereby helping improve accuracy of the determined TA of the target cell.

## Embodiment 2

**FIG. 7** is a schematic flowchart corresponding to a communication method according to Embodiment 2 of this application. As shown in FIG. 7, the method includes the following steps.

**S701:** A network device sends fourth information to a terminal, where the fourth information indicates to determine a TA of a first cell based on a downlink timing difference.

For example, the fourth information may indicate to determine a TA of at least one candidate cell based on a downlink timing difference, and the at least one candidate cell includes the first cell. For example, the fourth information may include an identifier of the at least one candidate cell. For example, the fourth information indicates to determine the TA of the first cell based on the downlink timing difference. It should be understood that, the fourth information only indicates that the TA of the first cell can be determined based on the downlink timing difference, but does not indicate to determine the TA of the first cell based on a downlink timing difference between a specific cell and the first cell. In this case, determining the TA of the first cell based on a downlink timing difference between a specific cell and the first cell may be specifically determined by the terminal. For example, after receiving the fourth information, the terminal may determine the TA of the first cell based on a downlink timing difference between a serving cell of the terminal (if there are a plurality of serving cells of the terminal, the terminal may select one of the serving cells, for example, a second cell) and the first cell, and then calculate the TA of the first cell based on a TA of the second cell and the downlink timing difference between the first cell and the second cell.

Optionally, the network device may further send sixth information to the terminal (in other words, the network device may send the fourth information and the sixth information to the terminal, where the fourth information and the sixth information may alternatively be same information). The sixth information indicates to determine the TA of the first cell based on the downlink timing difference between the first cell and the second cell. For example, the sixth information includes an identifier of the second cell. In other words, determining the TA of the first cell based on a downlink timing difference between a specific cell and the first cell may be indicated by the network device to the terminal by using the sixth information. In other words, the network device indicates, by using the fourth information, that the terminal can determine the TA of the first cell based on the downlink timing difference, and indicates, by using the sixth information, the terminal to determine the TA of the first cell based on a downlink timing difference between a specific cell and the first cell. In this way, after receiving the fourth information and the sixth information, the terminal may calculate the TA of the first cell based on the TA of the second cell and the downlink timing difference between the first cell and the second cell.

The fourth information and the sixth information may be carried in a same message, for example, both carried in a layer 1/layer 2 handover command; or may be carried in different messages.

For example, the network device may determine, based on capability information of the terminal and configuration information of reference signals of a plurality of cells, candidate cells whose TAs can be determined based on downlink timing differences, and send the fourth information (and the sixth information) to the terminal. For example, if the plurality of cells include the first cell, the second cell, a third cell, and a fourth cell, the second cell is a serving cell, and the first cell, the third cell, and the fourth cell are all candidate cells, the network device determines whether TAs of the first cell, the third cell, and the fourth cell can be determined based on downlink timing differences.

Case 1: The capability information of the terminal is first capability information, and the first capability information indicates that the terminal supports determining a TA based on intra-frequency reference signals. In this case, the network device may determine, based on configuration information of a first reference signal to a fourth reference signal, which reference signals and the second reference signal are intra-frequency reference signals. For example, the first reference signal and the second reference signal are intra-frequency reference signals, the third reference signal and the second reference signal are inter-frequency reference signals, and the fourth reference signal and the second reference signal are inter-frequency reference signals. In this case, the network device may determine that the TA of the first cell can be determined based on the downlink timing difference, but the TAs of the third cell and the fourth cell cannot be determined based on the downlink timing differences. In this case, the fourth information indicates to determine the TA of the first cell based on the downlink timing difference.

In addition, this example is described by using an example in which a TA of only one candidate cell (that is, the first cell) can be determined based on a downlink timing difference. In another possible example, if TAs of a plurality of candidate cells can all be determined based on downlink timing differences, the fourth information may indicate to determine the TAs of the plurality of candidate cells based on the downlink timing differences, or the fourth information may indicate to determine a TA of a part of the plurality of candidate cells based on a downlink timing difference. The part of candidate cells may be selected by the network device from the plurality of candidate cells. For example, if the network device determines to hand over the terminal to the first cell, the network device may indicate, by using the fourth information, the terminal to determine the TA of the first cell based on the downlink timing difference.

Case 2: The capability information of the terminal is second capability information, and the second capability information indicates that the terminal supports determining a TA based on inter-frequency reference signals. Optionally, the second capability information further indicates at least one band combination, and each band combination includes at least one band. In this case, the network device may determine, based on configuration information of a first reference signal to a fourth reference signal, which reference signals correspond to frequencies that are in a same band combination as a frequency corresponding to the second reference signal. For example, if frequencies corresponding to the first reference signal and the second reference signal are in a same band combination, the network device may determine that the TA of the first cell can be determined based on the downlink timing difference, and the fourth information may indicate to determine the TA of the first cell based on the downlink timing difference.

It may be understood that, in another possible implementation, the network device may first determine, based on the capability information of the terminal and configuration information of reference signals of a plurality of cells, a group to which the reference signals of the plurality of cells belong, then determine, based on the group to which the plurality of cells belong, candidate cells whose TAs can be determined based on downlink timing differences, and send the fourth information (and the sixth information) to the terminal. For a specific implementation of determining the group to which the plurality of cells belong, refer to Embodiment 1. Details are not described again.

**S702:** The network device sends fifth information to the terminal, where the fifth information indicates that the first cell is a target cell for handover.

For example, the network device may send the layer 1/layer 2 handover command to the terminal, where the handover command includes the fifth information. For example, the fifth information is a target cell field in the handover command, and the target cell field carries an identifier of the first cell. In addition, if the fourth information indicates a plurality of candidate cells, the target cell indicated by the fifth information may be one of the plurality of candidate cells.

The fifth information and the fourth information (and the sixth information) may be carried in a same message, for example, both carried in the handover command; or may be carried in different messages. When the fifth information and the fourth information (and the sixth information) are carried in different messages, the fourth information (and the sixth information) may be carried in a UE-based TA measurement command (UE-based TA measurement command), the fifth information may be carried in the handover command, and the UE-based TA measurement command may be sent before the handover command. In this way, after receiving the UE-based TA measurement command, the terminal may determine the TA of the first cell based on the downlink timing difference, so that after receiving the handover command, the terminal can directly access the first cell based on the determined TA of the first cell (that is, perform S703). This reduces a handover delay and improves handover efficiency.

For example, the network device may send the UE-based TA measurement command to the terminal by using a physical downlink control channel (physical downlink control channel, PDCCH) or a MAC control element (control element, CE) of the serving cell.

S703: The terminal accesses the target cell by using a TA of the target cell.

For example, the TA of the target cell may be determined by the terminal based on the TA of the second cell and the downlink timing difference between the first cell and the second cell after the terminal receives the fourth information (and the sixth information).

A difference between Embodiment 2 and Embodiment 1 is as follows: In Embodiment 1, the network device sends the group information to the terminal, so that the terminal can determine the TA of the candidate cell in advance based on the group information and the downlink timing difference. In this way, the terminal accesses the target cell in a timely manner after receiving the handover command. In Embodiment 2, the network device does not need to send group information to the terminal. Instead, before sending the handover command to the terminal (that is, slightly earlier than the handover command), or when sending the handover command to the terminal, the network device may indicate, by using additional information, to determine the TA of the target cell based on the downlink timing difference, to improve indication flexibility of the network device.

In Embodiment 1 and Embodiment 2, an implementation process of embodiments of this application is described from a perspective of communication between the network device and the terminal. The network device may include a CU and one or more DUs. Therefore, with reference to Embodiment 3, the following describes an implementation process of embodiments of this application from a perspective of communication between the CU, the DU, and the terminal.

**Embodiment 3**

In Embodiment 3, a possible interaction procedure between a CU, a DU, and a terminal is described based on Embodiment 1.

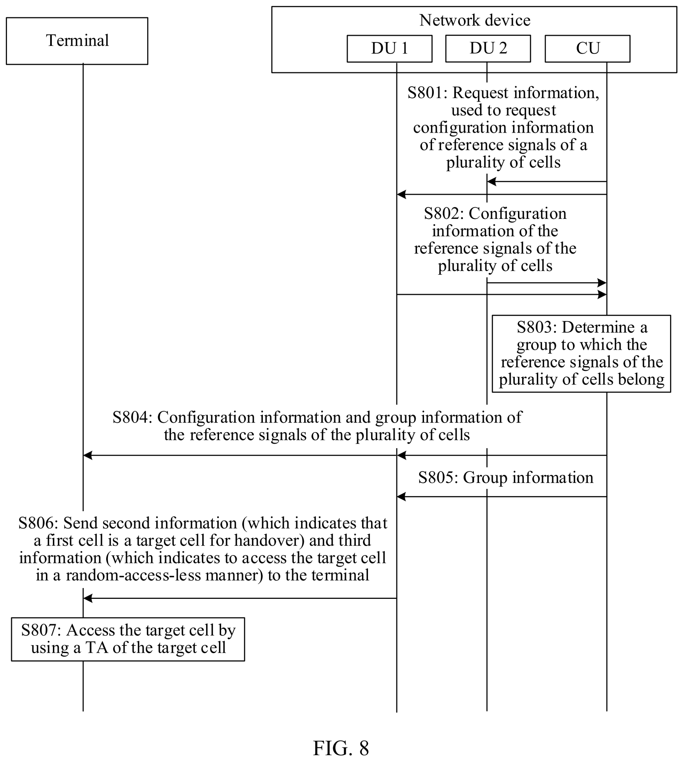

**FIG. 8** is a schematic flowchart corresponding to a communication method according to Embodiment 3 of this application. As shown in FIG. 8, the method includes the following steps.

S801: A CU sends request information to a DU to which a plurality of cells belong, where the request information is used to request configuration information of reference signals of the plurality of cells.

S802: The DU to which the plurality of cells belong sends the configuration information of the reference signals of the plurality of cells to the CU.

For example, the plurality of cells may belong to a same DU, or may belong to different DUs.

For example, the plurality of cells include a first cell, a second cell, a third cell, and a fourth cell. The second cell is a current serving cell of a terminal, the first cell and the second cell belong to a DU 1, and the third cell and the fourth cell belong to a DU 2. In this case, the CU may send first request information and second request information to the DU 1, where the first request information is used to request configuration information of a first reference signal of the first cell, and the second request information is used to request configuration information of a second reference signal of the second cell. For example, the CU may send a UE context modification request (UE context modification request) message 1 to the DU 1, where the UE context modification request message 1 includes the first request information and the second request information. The first request information is used as an example. The first request information may include an identifier of the first cell and a UE-based TA measurement request (UE-based TA measurement request). The UE-based TA measurement request indicates that the first request information is a request for configuring UE-based TA measurement of the first cell (that is, a request for the configuration information of the first reference signal). Correspondingly, the DU 1 may send the configuration information of the first reference signal of the first cell and the configuration information of the second reference signal of the second cell to the CU. For example, the DU 1 sends the configuration information of the first reference signal and the configuration information of the second reference signal to the CU by using a UE context modification response (UE context modification response) message.

In addition, the CU may send third request information and fourth request information to the DU 2, where the third request information is used to request configuration information of a third reference signal of the third cell, and the fourth request information is used to request configuration information of a fourth reference signal of the fourth cell. For example, the CU may send a UE context setup request (UE context setup request) message to the DU 2, where the UE context setup request message includes the third request information and the fourth request information. Correspondingly, the DU 2 may send the configuration information of the third reference signal of the third cell and the configuration information of the fourth reference signal of the fourth cell to the CU. For example, the DU 2 sends the configuration information of the third reference signal and the configuration information of the fourth reference signal to the CU by using a UE context setup response (UE context setup response) message.

The following describes two possible implementations with reference to Implementation 1 and Implementation 2.

**(1) Implementation 1**

The CU sends the first request information and the second request information to the DU 1, where the first request information includes first frequency information, the first request information is used to request to configure the first reference signal of the first cell based on the first frequency information, the second request information includes second frequency information, and the second request information is used to request to configure the second reference signal of the second cell based on the second frequency information. Correspondingly, after receiving the first request information and the second request information, the DU 1 may configure the first reference signal of the first cell based on the first frequency information (for example, configure frequency information corresponding to the first reference signal as the first frequency information), and configure the second reference signal of the second cell based on the second frequency information (for example, configure frequency information corresponding to the second reference signal as the second frequency information).

In other words, the CU may suggest, to the DU 1, that the frequency information corresponding to the first reference signal be configured as the first frequency information, and the DU 1 may accept or may not accept the suggestion. In this embodiment of this application, an example in which the DU 1 accepts the suggestion is used for description. In another implementation, the DU 1 may alternatively reject the suggestion. In this case, the DU 1 may configure the frequency information corresponding to the first reference signal as other frequency information, or may not return the configuration information of the first reference signal to the CU.

In addition, the CU further sends the third request information and the fourth request information to the DU 2, where the third request information includes third frequency information, the third request information is used to request to configure the third reference signal of the third cell based on the third frequency information, the fourth request information includes fourth frequency information, and the fourth request information is used to request to configure the fourth reference signal of the fourth cell based on the fourth frequency information. For details, refer to descriptions of the first request information and the second request information.

The first frequency information to the fourth frequency information may be determined by the CU based on capability information of the terminal. The following provides descriptions with reference to Case 1a and Case 2a. For example, the terminal may report the capability information of the terminal to the CU (for example, by using an RRC message), and then the CU sends the capability information of the terminal to the DU to which the plurality of cells belong.

Case 1a: The capability information of the terminal is first capability information, and the first capability information indicates that the terminal supports determining a TA based on intra-frequency reference signals. In this case, the CU may configure, based on the first capability information, the first frequency information to the fourth frequency information as same frequency information as much as possible, that is, make the frequency information corresponding to the first reference signal to the fourth reference signal as same frequency information as much as possible (or make the first reference signal to the fourth reference signal as intra-frequency reference signals as much as possible), so that the terminal can subsequently determine the TA based on a downlink timing difference.

Case 2a: The capability information of the terminal is second capability information, and the second capability information indicates that the terminal supports determining a TA based on inter-frequency reference signals. Optionally, the second capability information further indicates at least one band combination, and each band combination includes at least one band. In this case, the CU may configure, based on the second capability information, the first frequency information to the fourth frequency information to be in a same band combination as much as possible, that is, make frequencies corresponding to the first reference signal to the fourth reference signal to be in a same band combination as much as possible, so that the terminal can subsequently determine the TA based on a downlink timing difference.

It may be understood that, for the first request information to the fourth request information, the first request information is used as an example, and the foregoing descriptions are provided by using an example in which the first request information includes the first frequency information. In another possible implementation, the first request information may include first subcarrier information (in other words, the first request information is used to request to configure the first reference signal of the first cell based on the first subcarrier information); or the first request information may include the first frequency information and first subcarrier information (in other words, the first request information is used to request to configure the first reference signal of the first cell based on the first frequency information and the first subcarrier information). If the first request information to the fourth request information include the first subcarrier information to fourth subcarrier information, the first subcarrier information to the fourth subcarrier information may be determined by the CU based on the capability information of the terminal. For details, refer to descriptions of "the CU determines the first frequency information to the fourth frequency information based on the capability information of the terminal".

**(2) Implementation 2**

A difference between Implementation 2 and Implementation 1 lies in that, in Implementation 2, the request information may not carry frequency information (or may not carry subcarrier information, or may not carry frequency information or subcarrier information). In this case, the DU 1 and the DU 2 respectively determine frequency information corresponding to reference signals.

For example, after receiving the first request information and the second request information, the DU 1 may configure, based on capability information of the terminal, frequencies corresponding to the first reference signal and the second reference signal; and after receiving the third request information and the fourth request information, the DU 2 may configure, based on the capability information of the terminal, frequencies corresponding to the third reference signal and the third reference signal.

Case 1b: The capability information of the terminal is first capability information, and the first capability information indicates that the terminal supports determining a TA based on intra-frequency reference signals. In this case, the DU 1 may configure, based on the first capability information, that the first reference signal and the second reference signal correspond to a same frequency (for example, both correspond to a frequency 1) as much as possible, so that the terminal can subsequently determine the TA based on a downlink timing difference. Similarly, the DU 2 may configure, based on the first capability information, that the third reference signal and the fourth reference signal correspond to a same frequency (for example, both correspond to a frequency 2) as much as possible.

It may be understood that, because the DU 1 may not learn that the frequency configured by the DU 2 for the third reference signal and the fourth reference signal is the frequency 2, and the DU 2 may not learn that the frequency configured by the DU 1 for the first reference signal and the second reference signal is the frequency 1, the frequency 1 configured by the DU 1 may be different from the frequency 2 configured by the DU 2. If the second cell is a serving cell of the terminal, and the third cell is a target cell for handover, because the third cell and the second cell are inter-frequency reference signals, a TA of the third cell cannot be determined based on a downlink timing difference (in other words, the TA of the third cell cannot be determined based on a TA of the second cell and a downlink timing difference between the second cell and the third cell). Therefore, when the plurality of cells belong to a same DU, the CU may not need to provide a suggestion, but the DU configures the reference signals of the plurality of cells based on the capability information of the terminal. When the plurality of cells belong to a plurality of DUs, the CU may provide a suggestion for the plurality of DUs, so that the plurality of DUs can configure the reference signals of the plurality of cells as intra-frequency reference signals as much as possible.

Case 2b: The capability information of the terminal is second capability information, and the second capability information indicates that the terminal supports determining a TA based on inter-frequency reference signals. Optionally, the second capability information further indicates at least one band combination, and each band combination includes at least one band. In this case, the DU 1 may configure, based on the second capability information, frequencies corresponding to the first reference signal and the second reference signal to be in a same band combination as much as possible. Similarly, the DU 2 may configure, based on the first capability information, frequencies corresponding to the third reference signal and the fourth reference signal to be in a same band combination as much as possible. For details, refer to Case 1b. Details are not described again.

S803: The CU determines, based on the configuration information of the reference signals of the plurality of cells, a group to which the reference signals of the plurality of cells belong.

For example, the CU may determine, based on the capability information of the terminal and the configuration information of the reference signals of the plurality of cells, the group to which the reference signals of the plurality of cells belong. For details, refer to Embodiment 1.

S804: The CU sends the configuration information and group information of the reference signals of the plurality of cells to the terminal, where the group information indicates a group status of the reference signals of the plurality of cells; and correspondingly, the terminal receives the group information.

For example, the configuration information and the group information of the reference signals of the plurality of cells may be carried in a same message (for example, a same RRC message) or different messages. For example, the CU may send a UE context modification request message 2 to the DU 1, where the UE context modification request message 2 includes an RRC reconfiguration (RRC reconfiguration) message, and the RRC reconfiguration message includes the configuration information and the group information of the reference signals of the plurality of cells. Correspondingly, after receiving the UE context modification request message 2, the DU 1 may send the RRC reconfiguration message therein to the terminal.

It may be understood that the UE context modification request message in this embodiment of this application may also be replaced with another possible message, for example, a downlink RRC transmission message (DL RRC message).

For example, after receiving the group information, the terminal may determine a TA of a candidate cell based on a downlink timing difference. For example, the candidate cell includes the first cell. If the group information indicates that the first cell and the second cell (where the second cell is the current serving cell of the terminal) belong to a same group, the terminal may determine the TA of the first cell based on the TA of the second cell and the downlink timing difference between the first cell and the second cell.

S805: The CU sends the group information to the DU 1 (that is, a DU to which the serving cell of the terminal belongs).

Herein, the CU may send the group information to the DU 1 through an F1 interface.

S806: The DU 1 sends second information and third information to the terminal based on the group information, where the second information indicates that the first cell is a target cell for handover, and the third information indicates to access the target cell in a random-access-less manner.

For example, the terminal may report a measurement report (for example, a bottom-layer measurement report) of a plurality of candidate cells to the DU 1, so that the DU 1 can select one cell from the plurality of candidate cells as the target cell based on the measurement report of the plurality of candidate cells, and send the second information to the terminal. In addition, based on the group information, if it is determined that the target cell and the serving cell (for example, a source cell) form which the terminal is handed over belong to a same group, the DU 1 may send the third information to the terminal.

S807: The terminal accesses the target cell by using the TA of the target cell.

Herein, after receiving the second information and the third information, the terminal may access the first cell by using the TA that is of the first cell and that is determined based on the downlink timing difference.

It may be understood that: (1) The foregoing group information is applicable to a continuous handover scenario. For example, when the terminal is handed over from the second cell to the first cell, the CU or a source DU (that is, a DU to which the second cell belongs) may send the group information to a target DU (that is, a DU to which the first cell belongs). In this way, when the terminal is subsequently handed over from the first cell to another cell, the DU to which the first cell belongs may determine, based on the group information, whether to indicate to access the target cell in the random-access-less manner. It should be understood that, if the source DU and the target DU are a same DU (that is, intra-DU handover is performed), the group information does not need to be sent to the target DU.

(2) The foregoing is described by using an example in which the CU determines the group information. In another embodiment, the DU may alternatively determine the group information. For example, when the plurality of cells belong to the same DU (that is, the DU 1), the DU 1 may alternatively determine the group information. For a specific implementation, refer to the descriptions in Embodiment 3.


## Embodiment 4

In Embodiment 4, a possible interaction procedure between a CU, a DU, and a terminal is described based on Embodiment 2.

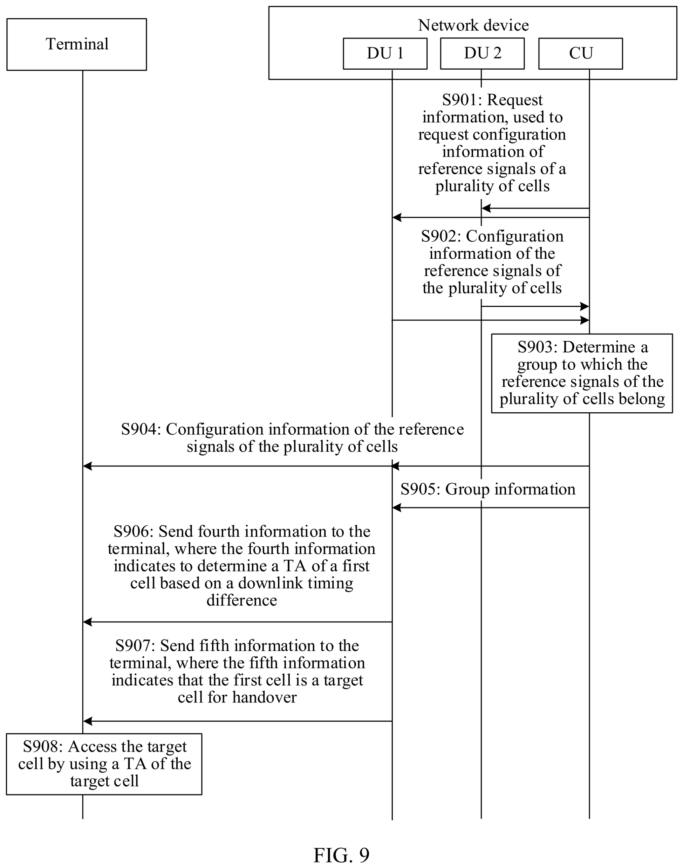

FIG. 9 is a schematic flowchart corresponding to a communication method according to Embodiment 4 of this application. As shown in FIG. 9, the method includes the following steps.

S901: A CU sends request information to a DU to which a plurality of cells belong, where the request information is used to request configuration information of reference signals of the plurality of cells.

S902: The DU to which the plurality of cells belong sends the configuration information of the reference signals of the plurality of cells to the CU.

For example, for specific implementations of S901 and S902, refer to S801 and S802.

S903: The CU determines, based on the configuration information of the reference signals of the plurality of cells, a group to which the reference signals of the plurality of cells belong.

For example, the CU may determine, based on capability information of a terminal and the configuration information of the reference signals of the plurality of cells, the group to which the reference signals of the plurality of cells belong. For details, refer to Embodiment 1.

S904: The CU sends the configuration information of the reference signals of the plurality of cells to the terminal.

S905: The CU sends group information to a DU 1 (that is, a DU to which a serving cell of the terminal belongs).

S906: The DU 1 sends fourth information to the terminal based on the group information, where the fourth information indicates to determine a TA of a first cell based on a downlink timing difference.

S907: The DU 1 sends fifth information to the terminal, where the fifth information indicates that the first cell is a target cell for handover.

S908: The terminal accesses the target cell by using a TA of the target cell.

For example, S903 to S905 are optional steps. In other words, the CU may not determine the group information, and send the group information to the DU 1. For example, when the plurality of cells belong to a same DU (that is, the DU 1), the CU does not need to determine the group information, and send the group information to the DU 1. In this case, the DU 1 may send the fourth information to the terminal based on the capability information of the terminal and the configuration information of the reference signals of the plurality of cells; or the DU 1 determines the group information based on the capability information of the terminal and the configuration information of the reference signals of the plurality of cells, and sends the fourth information to the terminal based on the group information.

A difference between Embodiment 4 and Embodiment 3 lies in that, in Embodiment 3, a network side sends the group information to the terminal, while in Embodiment 4, a network side does not need to send the group information to the terminal. For content other than the difference, Embodiment 3 and Embodiment 4 may be mutually referenced.

In addition, for Embodiment 3 and Embodiment 4, that the CU determines the group information is used as an example. After determining the group information, the CU may further modify the group information based on an actual requirement, or add a new cell to an existing group. For example, after determining that a first reference signal of the first cell and a second reference signal of a second cell belong to a same group (for example, a group 1), if a reference signal of a new cell (for example, a fifth cell) needs to be added to the group, the CU may send fifth request information to a DU to which the fifth cell belongs, to request configuration information of a reference signal of the fifth cell, where the fifth request information may include first frequency information and/or first subcarrier information. Correspondingly, if the DU accepts a suggestion of the CU, the DU may configure the reference signal of the fifth cell based on the first frequency information and/or the first subcarrier information, and send the configuration information of the reference signal of the fifth cell to the CU, so that the CU can add the reference signal of the fifth cell to the group 1.

For the foregoing embodiments, it may be understood that:

(1) The step numbers in each flowchart described in the foregoing embodiments are merely a procedure execution example, and do not constitute a limitation on a step execution sequence. In embodiments of this application, there is no strict execution sequence between steps having no time sequence dependence relationship with each other. Not all the steps shown in the flowcharts are mandatory steps. Some steps may be deleted from the flowcharts based on an actual requirement, or another possible step may be added to the flowcharts based on an actual requirement.
(2) The message name used in the foregoing embodiments is merely an example, and the message name is not limited in embodiments of this application. The foregoing is described by using layer 1/layer 2 handover (for example, intra-DU handover and inter-DU handover) as an example. The solutions in embodiments of this application may also be extended to another scenario. For example, the solutions may be extended to layer 3 handover (for example, inter-CU). In this case, a plurality of cells may belong to different network devices, or DUs (for example, a source DU and a target DU) to which the plurality of cells belong may be controlled by different CUs. For another example, the solutions may be extended to an mTRP, and one cell in the mTRP may correspond to a plurality of physical cell identifiers (physical cell identifier, PCI). Therefore, the candidate cell may be replaced with a PCI, and an LTM command may be replaced with a transmission configuration indication state (transmission configuration indication state, TCI state) activation command.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on a terminal and a network device based on the foregoing method examples. For example, division into each functional unit may be based on each corresponding function, or two or more functions may be integrated into one unit. The integrated unit may be implemented in a form of hardware, or may be implemented in a form of a software functional unit.

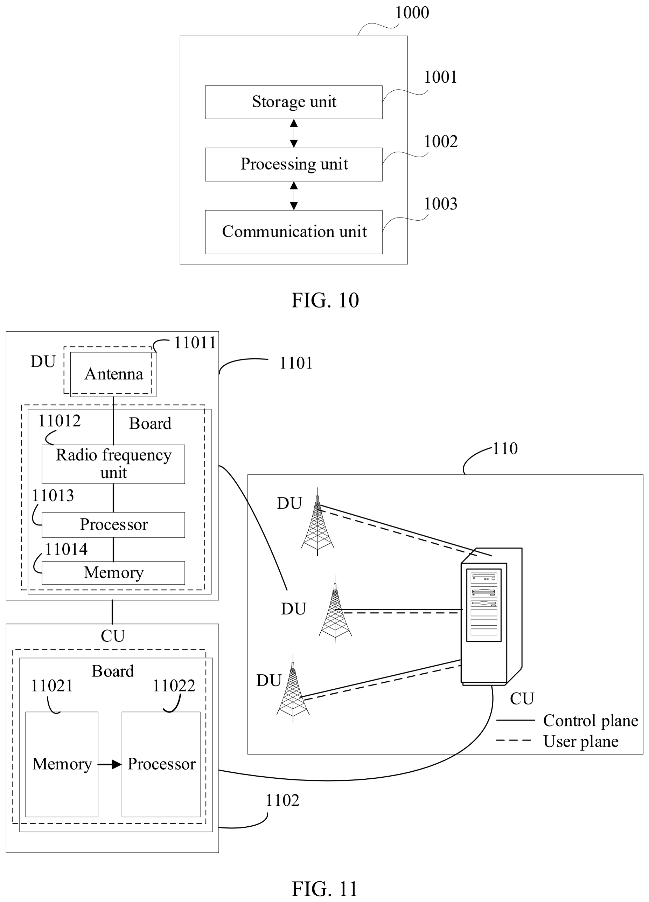

When the integrated unit is used, FIG. 10 is a possible example block diagram of an apparatus according to an embodiment of this application. As shown in FIG. 10, the apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.

(1) The apparatus 1000 may be the terminal in the foregoing embodiments. The processing unit 1002 may support the apparatus 1000 in performing actions of the terminal in the foregoing method examples. Alternatively, the processing unit 1002 mainly performs internal actions of the terminal in the method examples, and the communication unit 1003 may support communication between the apparatus 1000 and another device.

For example, in an embodiment, the communication unit 1003 is configured to: receive first information, where the first information indicates that a first reference signal of a first cell and a second reference signal of a second cell belong to a same group; receive second information, where the second information indicates that the first cell is a target cell for handover; and access the target cell by using a timing advance TA of the target cell, where the TA of the target cell is determined based on a TA of the second cell, the first reference signal, and the second reference signal.

In a possible design, the first information includes a parameter corresponding to the group, and the parameter includes: an index of the first reference signal and an index of the second reference signal; an identifier of the first cell and an identifier of the second cell; or configuration information of the first reference signal and configuration information of the second reference signal.

In a possible design, the communication unit 1003 is further configured to send first capability information, where the first capability information indicates that the terminal supports determining a TA based on intra-frequency reference signals, and the first reference signal and the second reference signal are intra-frequency reference signals.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the communication unit 1003 is further configured to send second capability information, where the second capability information indicates that the terminal supports determining a TA based on inter-frequency reference signals, and the first reference signal and the second reference signal are inter-frequency reference signals.

In a possible design, the second capability information further indicates at least one band combination, each band combination includes at least one band, and frequencies corresponding to the first reference signal and the second reference signal are in a same band combination.

In a possible design, that the first reference signal and the second reference signal are inter-frequency reference signals includes: The first reference signal and the second reference signal correspond to different frequencies, or the first reference signal and the second reference signal correspond to different subcarrier spacings.

In a possible design, the communication unit 1003 is further configured to receive third information from a network device, where the third information indicates to access the target cell in a random-access-less manner.

(2) The apparatus 1000 may be the network device in the foregoing embodiments. The processing unit 1002 may support the apparatus 1000 in performing actions of the network device in the foregoing method examples. Alternatively, the processing unit 1002 mainly performs internal actions of the network device in the method examples, and the communication unit 1003 may support communication between the apparatus 1000 and another device.

For example, in an embodiment, the communication unit 1003 is configured to: send first information, where the first information indicates that a first reference signal of a first cell and a second reference signal of a second cell belong to a same group; and send second information, where the second information indicates that the first cell is a target cell for handover, and the first reference signal and the second reference signal are used to determine a TA of the target cell.

In a possible design, the first information includes a parameter corresponding to the group, and the parameter includes: an index of the first reference signal and an index of the second reference signal; an identifier of the first cell and an identifier of the second cell; or configuration information of the first reference signal and configuration information of the second reference signal.

In a possible design, the communication unit 1003 is further configured to: receive first capability information, where the first capability information indicates that a terminal supports determining a TA based on intra-frequency reference signals; and send the first information based on the first capability information, the configuration information of the first reference signal, and the configuration information of the second reference signal, where the configuration information of the first reference signal and the configuration information of the second reference signal indicate that the first reference signal and the second reference signal are intra-frequency reference signals.

In a possible design, that the first reference signal and the second reference signal are intra-frequency reference signals includes: The first reference signal and the second reference signal correspond to a same frequency, or the first reference signal and the second reference signal correspond to a same subcarrier spacing.

In a possible design, the communication unit 1003 is further configured to: receive second capability information, where the second capability information indicates that a terminal supports determining a TA based on inter-frequency reference signals; and send the first information based on the second capability information, the configuration information of the first reference signal, and the configuration information of the second reference signal, where the configuration information of the first reference signal and the configuration information of the second reference signal indicate that the first reference signal and the second reference signal are inter-frequency reference signals.

In a possible design, the second capability information further indicates at least one band combination, each band combination includes at least one band, and frequencies corresponding to the first reference signal and the second reference signal are in a same band combination.

In a possible design, that the first reference signal and the second reference signal are inter-frequency reference signals includes: The first reference signal and the second reference signal correspond to different frequencies, or the first reference signal and the second reference signal correspond to different subcarrier spacings.

In a possible design, the communication unit 1003 is further configured to send third information to the terminal, where the third information indicates to access the target cell in a random-access-less manner.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

FIG. 11 is a diagram of a structure of a network device according to an embodiment of this application. The network device (or a base station) may be used in the communication system shown in FIG. 1, to perform functions of the network device in the foregoing method embodiments. As shown in FIG. 11, the network device 110 may include one or more DUs 1101 and one or more CUs 1102. The DU 1101 may include at least one antenna 11011, at least one radio frequency unit 11012, at least one processor 11013, and at least one memory 11014. The DU 1101 part is mainly configured to: receive and send a radio frequency signal, perform conversion between a radio frequency signal and a baseband signal, and perform partial baseband processing. The CU 1102 may include at least one processor 11022 and at least one memory 11021.

The CU 1102 part is mainly configured to: perform baseband processing, control the network device, and the like. The DU 1101 and the CU 1102 may be physically disposed together, or may be physically disposed separately, that is, a distributed base station. The CU 1102 is a control center of the network device, may also be referred to as a processing unit, and is mainly configured to complete a baseband processing function. For example, the CU 1102 may be configured to control the network device to perform an operation procedure related to the network device in the foregoing method embodiments.

In addition, optionally, the network device 110 may include one or more radio frequency units, one or more DUs, and one or more CUs. The DU may include at least one processor 11013 and at least one memory 11014, the radio frequency unit may include at least one antenna 11011 and at least one radio frequency unit 11012, and the CU may include at least one processor 11022 and at least one memory 11021.

In an example, the CU 1102 may include one or more boards. A plurality of boards may jointly support a radio access network (for example, a 5G network) with a single access indication, or may respectively support radio access networks (for example, an LTE network, a 5G network, or another network) with different access standards. The memory 11021 and the processor 11022 may serve one or more boards. In other words, a memory and a processor may be disposed on each board. Alternatively, a plurality of boards may share a same memory and a same processor. In addition, a necessary circuit may be further disposed on each board. The DU 1101 may include one or more boards. A plurality of boards may jointly support a radio access network (for example, a 5G network) with a single access indication, or may respectively support radio access networks (for example, an LTE network, a 5G network, or another network) with different access standards. The memory 11014 and the processor 11013 may serve one or more boards. In other words, a memory and a processor may be disposed on each board. Alternatively, a plurality of boards may share a same memory and a same processor. In addition, a necessary circuit may be further disposed on each board.

The network device shown in FIG. 11 can implement all processes related to the network device in the foregoing method embodiments. Operations and/or functions of the modules in the network device shown in FIG. 11 are respectively intended to implement the corresponding procedures in the foregoing method embodiments. For details, refer to the descriptions in the foregoing method embodiments. To avoid repetition, detailed descriptions are properly omitted herein.

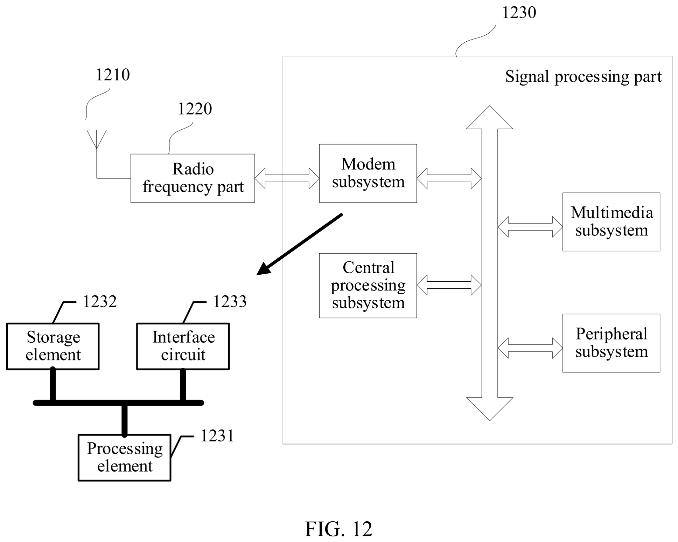

FIG. 12 is a diagram of a structure of a terminal according to an embodiment of this application. The terminal may be used in the communication system shown in FIG. 1, to implement operations of the terminal in the foregoing embodiments. As shown in FIG. 12, the terminal includes an antenna 1210, a radio frequency part 1220, and a signal processing part 1230. The antenna 1210 is connected to the radio frequency part 1220. In a downlink direction, the radio frequency part 1220 receives, through the antenna 1210, information sent by a network device, and sends, to the signal processing part 1230 for processing, the information sent by the network device. In an uplink direction, the signal processing part 1230 processes information of the terminal and sends processed information to the radio frequency part 1220, and the radio frequency part 1220 processes the information of the terminal and then sends processed information to the network device through the antenna 1210.

The signal processing part 1230 may include a modem subsystem, configured to process data at each communication protocol layer. The signal processing part 1230 may further include a central processing subsystem, configured to implement processing of an operating system and an application layer of the terminal. In addition, the signal processing part 1230 may further include another subsystem, for example, a multimedia subsystem or a peripheral subsystem. The multimedia subsystem is configured to control a camera, a screen display, or the like of the terminal, and the peripheral subsystem is configured to implement a connection to another device. The modem subsystem may be a chip that is separately disposed.

The modem subsystem may include one or more processing elements 1231, for example, include a main control CPU and another integrated circuit. In addition, the modem subsystem may further include a storage element 1232 and an interface circuit 1233. The storage element 1232 is configured to store data and a program. However, a program used to perform the method performed by the terminal in the foregoing methods may not be stored in the storage element 1232, but is stored in a memory outside the modem subsystem, and is loaded and used by the modem subsystem when to be used. The interface circuit 1233 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element that is located on a same chip as the processing element, that is, an on-chip storage element.

In another implementation, a program used to perform the method performed by the terminal in the foregoing methods may be in a storage element located on a different chip from the processing element, that is, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented in a form of the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processor element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 10. For example, the processing element may be a general-purpose processor, for example, a CPU; or may be one or more integrated circuits configured to implement the foregoing methods, for example, one or more ASICs, one or more microprocessors DSPs, one or more FPGAs, or a combination of at least two of these forms of integrated circuits. The storage element may be implemented by using a memory, and a function of the storage element may be the same as that of the storage unit described in FIG. 10. The storage element may be one memory, or may be a general name of a plurality of memories.

The terminal shown in FIG. 12 can implement processes related to the terminal in the foregoing method embodiments. Operations and/or functions of modules in the terminal shown in FIG. 12 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

It is clearly that a person skilled in the art can make various modifications and variations to this application without departing from the spirit and scope of this application. This application is intended to cover these modifications and variations of this application provided that these modifications and variations fall within the scope of the claims of this application and equivalent technologies of the claims.

## Claims

1.  A communication method, wherein the method comprises:

    receiving first information, wherein the first information indicates that a first cell and a second cell belong to a same group, and the second cell is a current serving cell of a terminal;
    receiving second information, wherein the second information indicates that the first cell is a target cell for handover; and
    accessing the target cell by using a timing advance TA of the target cell, wherein the TA of the target cell is determined based on a TA of the second cell and a downlink timing difference between the first cell and the second cell.

2.  The method according to claim 1, wherein the first information comprises a parameter corresponding to the group, and the parameter comprises:

    an index of a first reference signal of the first cell and an index of a second reference signal of the second cell, wherein the first reference signal and the second reference signal are used to determine the downlink timing difference;
    an identifier of the first cell and an identifier of the second cell; or
    configuration information of the first reference signal and configuration information of the second reference signal.

3.  The method according to claim 2, wherein the method further comprises:

sending first capability information, wherein the first capability information indicates that the terminal supports determining a TA based on intra-frequency reference signals, and
the first reference signal and the second reference signal are intra-frequency reference signals.

4. The method according to claim 3, wherein that the first reference signal and the second reference signal are intra-frequency reference signals comprises:
the first reference signal and the second reference signal correspond to a same frequency, or the first reference signal and the second reference signal correspond to a same subcarrier spacing.

5. The method according to claim 2, wherein the method further comprises:

sending second capability information, wherein the second capability information indicates that the terminal supports determining a TA based on inter-frequency reference signals, and
the first reference signal and the second reference signal are inter-frequency reference signals.

6. The method according to claim 5, wherein the second capability information further indicates at least one band combination, and each band combination comprises at least one band; and
frequencies corresponding to the first reference signal and the second reference signal are in a same band combination.

7. The method according to claim 5 or 6, wherein that the first reference signal and the second reference signal are inter-frequency reference signals comprises:
the first reference signal and the second reference signal correspond to different frequencies, or the first reference signal and the second reference signal correspond to different subcarrier spacings.

8. The method according to any one of claims 1 to 7, wherein the method further comprises:
receiving third information from the network device, wherein the third information indicates to access the target cell in a random-access-less manner.

9. A communication method, wherein the method comprises:

sending first information, wherein the first information indicates that a first cell and a second cell belong to a same group, and the second cell is a current serving cell of a terminal; and
sending second information, wherein the second information indicates that the first cell is a target cell for handover, and a TA of the second cell and a downlink timing difference between the first cell and the second cell are used to determine a TA of the target cell.

10. The method according to claim 9, wherein the first information comprises a parameter corresponding to the group, and the parameter comprises:

an index of a first reference signal of the first cell and an index of a second reference signal of the second cell, wherein the first reference signal and the second reference signal are used to determine the downlink timing difference;
an identifier of the first cell and an identifier of the second cell; or
configuration information of the first reference signal and configuration information of the second reference signal.

11. The method according to claim 10, wherein the method further comprises: receiving first capability information, wherein the first capability information indicates that the terminal supports determining a TA based on intra-frequency reference signals; and
sending the first information comprises: sending the first information based on the first capability information, the configuration information of the first reference signal, and the configuration information of the second reference signal, wherein the configuration information of the first reference signal and the configuration information of the second reference signal indicate that the first reference signal and the second reference signal are intra-frequency reference signals.

12. The method according to claim 11, wherein that the first reference signal and the second reference signal are intra-frequency reference signals comprises:

the first reference signal and the second reference signal correspond to a same frequency, or the first reference signal and the second reference signal correspond to a same subcarrier spacing.

13. The method according to claim 10, wherein the method further comprises: receiving second capability information, wherein the second capability information indicates that the terminal supports determining a TA based on inter-frequency reference signals; and
sending the first information comprises: sending the first information based on the second capability information, the configuration information of the first reference signal, and the configuration information of the second reference signal, wherein the configuration information of the first reference signal and the configuration information of the second reference signal indicate that the first reference signal and the second reference signal are inter-frequency reference signals.

14. The method according to claim 13, wherein the second capability information further indicates at least one band combination, and each band combination comprises at least one band; and
frequencies corresponding to the first reference signal and the second reference signal are in a same band combination.

15. The method according to claim 13 or 14, wherein that the first reference signal and the second reference signal are inter-frequency reference signals comprises:
the first reference signal and the second reference signal correspond to different frequencies, or the first reference signal and the second reference signal correspond to different subcarrier spacings.

16. The method according to any one of claims 9 to 15, wherein the method further comprises:
sending third information to the terminal, wherein the third information indicates to access the target cell in a random-access-less manner.

17. A communication apparatus, comprising a module configured to perform the method according to any one of claims 1 to 16.

18. A communication apparatus, comprising a processor, wherein the processor is coupled to a memory, the memory stores a computer program, and the processor is configured to invoke the computer program in the memory to cause the communication apparatus to perform the method according to any one of claims 1 to 16.

19. A communication system, wherein the communication system comprises a network device and a terminal, the terminal is configured to perform the method according to any one of claims 1 to 8, and the network device is configured to perform the method according to any one of claims 9 to 16.

20. A computer-readable storage medium, wherein the storage medium stores a computer program or instructions, and when the computer program or the instructions are executed by a computer, the method according to any one of claims 1 to 16 is implemented.

21. A computer program product, wherein when a computer reads and executes the computer program product, the computer is caused to perform the method according to any one of claims 1 to 16.

FIG. 1

FIG. 2A

FIG. 2B

CU-CP

RRC

PDCP

CU-UP

SDAP

PDCP

Air interface
control plane
protocol stack

Air interface
user plane
protocol stack

RLC

MAC

PHY

RLC

MAC

PHY

DU

EP 4 694 339 A1

(a) Without timing advance adjustment

(b) With timing advance adjustment

FIG. 3

Downlink slot boundary of a cell A

Downlink slot boundary 1
determined by a terminal

Tp1

Downlink slot boundary of a cell B

Downlink slot
boundary 2 determined
by the terminal

Tp1

Downlink timing difference
between the cell A and the cell B

FIG. 4

Downlink slot boundary of a cell A

Downlink slot boundary 1
determined by a terminal

Tp1

TA of the cell A=2Tp1

Downlink slot
boundary of a cell B

Downlink slot boundary 2
determined by the terminal

Tp2

TA of the cell B=2Tp2

Downlink timing difference
between the cell A and the cell B

FIG. 5

```
┌─────────────────────┐                    ┌─────────────────────┐
│      Terminal       │                    │  Network device     │
│                     │                    │ (a plurality of cells)│
└─────────────────────┘                    └─────────────────────┘

         S601: Send first information to the terminal,
         where the first information indicates that a first
         reference signal of a first cell and a second
         reference signal of a second cell belong to a
                        same group
                                                    ◄

         S602: Send second information to the terminal,
         where the second information indicates that the
              first cell is a target cell for handover
                                                    ◄

         S603: The terminal accesses the target cell by
         using a TA of the target cell, where the TA of
         the target cell is determined based on a TA of
            the second cell and a downlink timing
          difference between the first cell and the
                        second cell
                                                    ►
```

FIG. 6

```
┌─────────────────────┐                    ┌─────────────────────┐
│      Terminal       │                    │  Network device     │
│                     │                    │ (a plurality of cells)│
└─────────────────────┘                    └─────────────────────┘

         S701: Send fourth information to the terminal,
          where the fourth information indicates to
          determine a TA of a first cell based on a
                 downlink timing difference
                                                    ◄

         S702: Send fifth information to the terminal,
          where the fifth information indicates that the
              first cell is a target cell for handover
                                                    ◄

         S703: The terminal accesses the target cell
              by using a TA of the target cell
                                                    ►
```

FIG. 7

```
┌──────────────┐                    ┌──────────────────────────────────────────┐
│              │                    │              Network device              │
│   Terminal   │                    │  ┌──────┐   ┌──────┐   ┌──────┐          │
│              │                    │  │ DU 1 │   │ DU 2 │   │  CU  │          │
└──────────────┘                    └──┴──────┴───┴──────┴───┴──────┴──────────┘
```

S801: Request information, used to request configuration information of reference signals of a plurality of cells

S802: Configuration information of the reference signals of the plurality of cells

S803: Determine a group to which the reference signals of the plurality of cells belong

S804: Configuration information and group information of the reference signals of the plurality of cells

S805: Group information

S806: Send second information (which indicates that a first cell is a target cell for handover) and third information (which indicates to access the target cell in a random-access-less manner) to the terminal

S807: Access the target cell by using a TA of the target cell

FIG. 8

FIG. 9

1000

Storage unit — 1001

Processing unit — 1002

Communication unit — 1003

FIG. 10

DU

Antenna — 11011

1101

11012 Board

Radio frequency unit

11013 Processor

11014 Memory

CU

Board

11021 Memory

11022 Processor

1102

110

DU

DU

DU

CU

—— Control plane
- - - User plane

FIG. 11

1230

1210

1220

Signal processing part

Radio frequency part

Modem subsystem

Multimedia subsystem

Central processing subsystem

Peripheral subsystem

1232

1233

Storage element

Interface circuit

1231

Processing element

FIG. 12

## INTERNATIONAL SEARCH REPORT

| International application No. |
| --- |
| **PCT/CN2024/092359** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; ENTXT; ENTXTC; CNKI: 3GPP: 小区, 切换, 定时提前, 定时差, 偏移, 同频, 异频, 分组, 参考信号, handover, timing advance, timing offset, downlink, inter-frequency, intra-frequency, group, reference signal, TA

**C. DOCUMENTS CONSIDERED TO BE RELEVANT**

| Category* | Citation of document, with indication, where appropriate, of the relevant passages | Relevant to claim No. |
| --- | --- | --- |
| X | CN 113498619 A (QUALCOMM INC.) 12 October 2021 (2021-10-12) description, paragraphs [0016]-[0122] | 1, 8, 9, 16-21 |
| X | US 2020351728 A1 (INSTITUTE FOR INFORMATION INDUSTRY) 05 November 2020 (2020-11-05) description, paragraphs [0029]-[0082] | 1, 8, 9, 16-21 |
| X | CN 114070376 A (HUAWEI TECHNOLOGIES CO., LTD.) 18 February 2022 (2022-02-18) description, paragraphs [0056]-[0131] | 1, 8, 9, 16-21 |
| A | CN 106680770 A (SPREADTRUM COMMUNICATIONS (SHANGHAI) CO., LTD.) 17 May 2017 (2017-05-17) entire document | 1-21 |
| A | CN 109041150 A (HUAWEI TECHNOLOGIES CO., LTD.) 18 December 2018 (2018-12-18) entire document | 1-21 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 August 2024** | **10 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| :--- |
| **PCT/CN2024/092359** |

| Patent document cited in search report | | | Publication date (day/month/year) | Patent family member(s) | | | Publication date (day/month/year) |
| :--- | :--- | :--- | :--- | :--- | :--- | :--- | :--- |
| CN | 113498619 | A | 12 October 2021 | None | | | |
| US | 2020351728 | A1 | 05 November 2020 | US | 11503515 | B2 | 15 November 2022 |
| CN | 114070376 | A | 18 February 2022 | None | | | |
| CN | 106680770 | A | 17 May 2017 | None | | | |
| CN | 109041150 | A | 18 December 2018 | None | | | |

Form PCT/ISA/210 (patent family annex) (July 2022)

**EP 4 694 339 A1**

**REFERENCES CITED IN THE DESCRIPTION**

**Patent documents cited in the description**

- CN 202310533185